(19)

Europäisches Patentamt
European Patent Office
Office européen des brevets

(11) **EP 2 083 398 A1**

(12) **EUROPEAN PATENT APPLICATION**

(43) Date of publication:
29.07.2009 Bulletin 2009/31

(51) Int Cl.:
*G07C 9/00* (2006.01)    *G06F 21/00* (2006.01)
*G07F 7/10* (2006.01)

(21) Application number: 08102990.2

(22) Date of filing: 27.03.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 25.01.2008 US 20028

(71) Applicant: Qualcomm Incorporated
San Diego, CA 92121-1714 (US)

(72) Inventor: Shi, Guangming
San Diego, CA 92130 (US)

(74) Representative: Copp, David Christopher et al
Dummett Copp
25 The Square
Martlesham Heath
Ipswich IP5 3SL
Suffolk (GB)

(54) **Biometric Smart Card for Mobile Devices**

(57)    A method and apparatus for controlling access to the data stored on a smart card for use in mobile devices. A user initializes the smart card memory by saving an authentication credential in memory. Subsequently, when various applications executed on the mobile device seek to retrieve the data stored in the smart card memory, the user must submit to an authentication process before access to the data stored in the smart card memory is granted. Embodiments utilize biometric traits and biometric templates stored in memory as authentication credentials. Biometric sensors are provided with the smart card so that a candidate biometric trait can be generated and compared with a biometric template stored in memory. If the biometric trait matches the stored biometric template, then access to the data stored in the smart card is granted.

FIG. 1

## Description

FIELD OF INVENTION

The present invention relates to a system and method for securing mobile devices and the data stored on a smart card for use in mobile devices.

BACKGROUND OF INVENTION

A Subscriber Identity Module (SIM) card is a portable memory chip used in some models of cellular telephones, specifically GSM phones. The SIM holds personal identity information, cell phone numbers, phone book, and text message data as well as the provisioning information which allows a cellular telephone to make and receive calls on a cellular telephone network including ensuring airtime is properly charged to the user's account. Because the portable SIM card contains personal and provisioning data, users of SIM card mobile devices can easily exchange their cellular telephone equipment with very little interruption in service. The user simply slides the SIM card out of the old cellular telephone and into the new cellular telephone. Once the SIM card is inserted into the new cellular telephone all of the necessary personal and provisioning data is immediately available for use in the new mobile device. In short, the SIM card is a memory chip that automatically activates the cellular telephone into which it is inserted.

Due in large part to its ease of use and portability, a SIM card provides users with equipment flexibility. For example, if a user's cellular telephone runs out of battery power, the user may simply remove the SIM card from their own cellular telephone and slide it into any other GSM cellular telephone to make a call. In this way a user may borrow a second user's cellular telephone and insert his/her SIM card into the borrowed cellular telephone. The user's service provider processes the call as if it were made from the user's own phone. The borrowed cellular telephone's owner would not be charged for any of the network usage even though the borrowed cellular telephone was used to make a call. Another benefit of SIM cards is they simplify upgrading cellular telephone equipment. The user may simply slide the existing SIM card into the new cellular telephone equipment and proceed as if no change in equipment were made. Users may even keep multiple phones for different purposes; an inexpensive phone in the glove compartment for emergency use, one phone for work and another for home, for example. The user simply can slide the same SIM card into whichever phone the user wishes to use.

The increased mobility and flexibility allowed by the SIM comes at a price. In particular, because users may quickly and easily interchange SIM cards, lost or stolen SIM cards are susceptible to misappropriation of the data stored therein. Accordingly, a security system is needed to protect the valuable data stored on SIM cards.

SUMMARY

Various embodiments provide systems and methods for securing mobile devices, and securing data stored on removable SIM cards and their equivalents. In an embodiment, a new type of SIM with an integrated biometric security sensor is provided. Use of biometric authentication credentials are employed to secure the data stored on a SIM card and the card itself as well as the mobile device. Alternative embodiments provide a modular biometric sensor which may be removably attached to a SIM card or its equivalent.

BRIEF DESCRIPTION OF THE DRAWINGS

The accompanying drawings, which are incorporated herein and constitute part of this specification, illustrate embodiments of the invention, and, together with the general description given above and the detailed description given below, serve to explain features of the invention.

Fig. 1 is a functional block diagram of an embodiment.

Fig. 2 is functional block diagram of an embodiment of a modified SIM card with an integrated biometric sensor.

Fig. 3 is a hardware/software architecture diagram of an embodiment.

Fig. 4 is a process flow diagram of an initialization process.

Fig. 5 is a process flow diagram of an authentication process.

Fig. 6 is a system diagram of an alternative embodiment that allows a user to remotely override the SIM security

FIG. 7 is a process flow diagram of an alternative embodiment which selectively stores data as secured or unsecured data

FIG. 8 is a process flow diagram of the selective authentication process implemented in an alternative embodiment.

FIG. 9 is an exploded view of components of a biometric sensor suitable for use with the various embodiments.

Fig. 10 is a diagram of the pixel array of the image sensor shown in Fig. 7.

Fig. 11 is a circuit block diagram showing components of a biometric sensor.

FIGs. 12A-12C are representative images of fingerprints illustrating characteristics of the fingerprint used to authenticate a user.

Fig. 13 is a functional block diagram of an alternative embodiment of a SIM card with a replaceable biosensor module.

FIG. 14 is an alternative hardware/software architecture.

FIG. 15 is a functional block diagram of an alternative embodiment of a SIM card with a replaceable biosensor module.

FIG. 16 is a process flow diagram of an alternative embodiment which allows for multiple SIM accesses during a period of time where valid authentication is determined.

FIG. 17 is functional block diagram of an embodiment of an access control card with an integrated biometric sensor for controlling access to a mobile device.

DETAILED DESCRIPTION

The various embodiments will be described in detail with reference to the accompanying drawings. Wherever possible, the same reference numbers will be used throughout the drawings to refer to the same or like parts. References made to particular examples and implementations are for illustrative purposes, and are not intended to limit the scope of the invention or the claims.

Descriptions of the various embodiments refer to a SIM card but the embodiments are equally applicable to equivalent memory cards and modules. The equivalent of a SIM in the Universal Mobile Telecommunications System (UMTS) is called the Universal Integrated Circuit Card (UICC), and equivalent of a SIM in Code Division Multiple Access (CDMA) phones is the Removable User Identity Module (R-UIM). Moreover, as will be obvious to one of skill in the art, the various embodiments may be applied to any form of smart card, including for example, secure digital (SD) and flash memory cards. For sake of simplicity, reference will be made to a generic smart card or SIM card, but such reference is not intended to limit the scope of the invention or claims.

As used herein, the terms "mobile device", "mobile handset" and "handheld device" refer to any one or all of cellular telephones, personal digital assistants (PDAs) with wireless modems, wireless electronic mail receivers (e.g., the Blackberry® and Treo® devices), multimedia Internet enabled cellular telephones (e.g., the iPhone®), and similar personal electronic devices which use a SIM card or its equivalent. In a preferred embodiment, the mobile device is a cellular telephone. However, cellular telephone communication capability is not necessary in all embodiments as the various embodiments may be used to secure data stored on a variety of memory chips as may be used in other personal electronics.

Recently, the processing power and data storage capabilities of small portable mobile devices have increased not only their popularity and usage, but also the sophistication of the applications which they support. As the sophistication of the applications utilized on mobile devices increases, the data stored therein has become increasingly more sensitive and confidential. The data stored on mobile devices has advanced beyond mere personal phone/contacts books. Users are now able to generate, send and receive documents, spreadsheets, messages, etc. which may be stored in the mobile device memory or on smart cards. While the size and portability of mobile devices make them both easily accessible, the size and portability also makes them easily misplaced or stolen.

Often times a user's data stored within the mobile device is more valuable to the user than the mobile device itself. Such highly valuable data is often stored on a removable smart card inserted into the mobile device. Smart cards, such as a Subscriber Identity Module (SIM) card, provide a user with a highly portable memory storage unit. Smart cards are thumbnail-size cards with embedded integrated circuits which can process and store digital information. Thus, smart cards can receive data inputs, process the data, and deliver the processed data as an output. Smart cards may contain both volatile and non-volatile memory storage circuits.

SIM cards are one form of smart cards used in mobile devices, particularly cellular telephones. SIM cards are available in a variety of storage sizes up to 1 GB. In addition to storing personal data, SIM cards typically store network specific information used to authenticate and identify subscribers on the cellular telephone network, the most important of these are the ICCID, IMSI, Authentication Key (Ki), Local Area Identity (LAI). The SIM also stores other carrier specific data such as the SMSC (Short Message Service Center) number, Service Provider Name (SPN), Service Dialing Numbers (SDN), and Value Added Service (VAS) applications.

Due to the portability of smart cards, the data contained in non-volatile memory is susceptible to misappropriation. Since the provisioning information for a mobile device is typically stored on the SIM card, a user who misappropriates another user's SIM card may be able to make and receive phone calls, access e-mail, and send and receive SMS messages on the misappropriated cellular account. In addition, sensitive and confidential information stored on the smart card is vulnerable to misappropriation. Consequently, systems and methods for securing mobile devices and the data stored on a smart card for use in mobile devices are needed.

The various embodiments of the present invention provide systems and methods that enable users to secure data stored on their smart cards by requiring biometric authentication before the stored data can be accessed. Access is controlled by an access controller that receives biometric authentication information from a biometric sensor. Embodiments provide the biometric sensor and access controller integrated within the smart card. Other embodiments provide the biometric sensor and access controller as a modular unit that can be plugged into a smart card. Still other embodiments provide the biometric sensor as a modular unit that can be plugged into a smart card which includes the access controller unit. Because the biometric sensor may be vulnerable to mechanical failure and physical damage, some embodiments include replaceable biometric sensors. In use, the various embodiments require a user to provide a biometric sample, such as a fingerprint scan, prior to storing or accessing sensitive personal data to the smart card. In some embodiments, each time users, devices or applications attempt to access the stored sensitive data, users must authenticate themselves before access will be granted. In other embodiments access to stored sensitive data is permitted so long as users have authenticated themselves within some acceptable period of time (or other criteria(s)).

The various embodiments involve methods which may be implemented in a smart card by programming the processor unit on the smart card with software instructions which cause the processor unit to accomplish the embodiment process steps and provide the functionality of the various embodiments. Such software instructions are typically stored in non-volatile memory, such as flash memory or electronically erasable programmable read only memory (EEPROM). To simplify the description of the embodiments, the smart card may be described as accomplishing the various tasks and process steps, even though it is an internal processor, or other internal components such as an access controller unit, that performs the steps in accordance with software instructions.

The various embodiments employ biometric authentication to secure data stored on the smart cards. Biometric authentication is chosen for a number of reasons. Biometric authentication credentials cannot be lost or forgotten (as is the case with password authentication), are difficult to duplicate, copy, share and/or distribute, and require the person being authenticated to be present at the time and point of authentication. In the illustrated embodiments, a biometric fingerprint authentication is disclosed. However, any form of biometric authentication may be employed. For example, facial recognition, hand geometry, keystroke, hand veins, retinal scan, signature, voice, facial thermogram, odor, DNA, gait or ear recognition are examples of different biometric traits which may be used as a user's authentication credentials. For sake of simplicity, reference will be made to fingerprint authentication in descriptions of the embodiments, but such references are not intended to limit the scope of the invention or claims.

Use of biometric security authentication is not intended to exclude the use of password protection security systems. Biometric security authentication systems can be used in conjunction with passwords or tokens to provide an additional layer security to existing systems without replacing them.

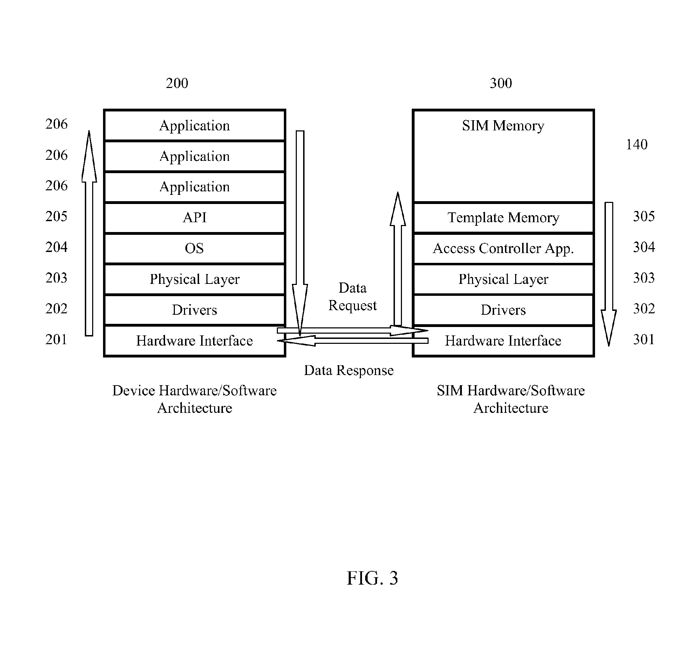

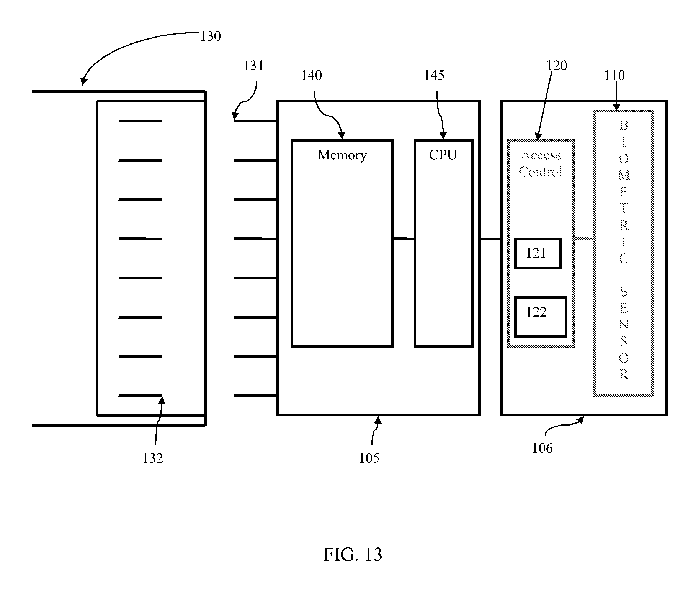

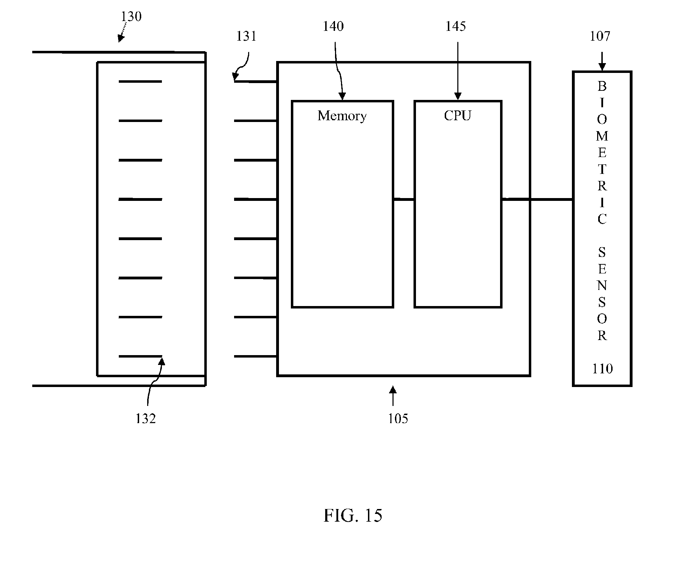

The embodiments include two basic elements, a biometric sensor and an access controller, which work cooperatively to secure data stored on a smart card. The biometric sensor provides biometric authentication data to the access controller which performs the functions of authenticating the user and granting access to data if the user is authenticated. The various embodiments reflect the different physical implementations of these two elements. In a first embodiment illustrated in FIG. 3, the biometric sensor and access controller may be integrated together into the smart card itself, so the smart card does not allow access to data stored therein until the user is authenticated using the biometric sensor on the smart card. In a second embodiment illustrated in FIG. 13, the biometric sensor and access controller may be integrated together in a separate card that must be connected to the smart card to enable access to data. This second embodiment may be a small chip that plugs directly into the smart card, or may be connected to the mobile device, or may be implemented within the mobile device itself. In a third embodiment illustrated in FIG. 15, the biometric sensor is positioned within a separate card or module which connects to the smart card which includes the access controller. The functionality of these embodiments is similar so the first embodiment is described first to explain the overall functioning of the invention, followed by descriptions of differences of the other embodiments.

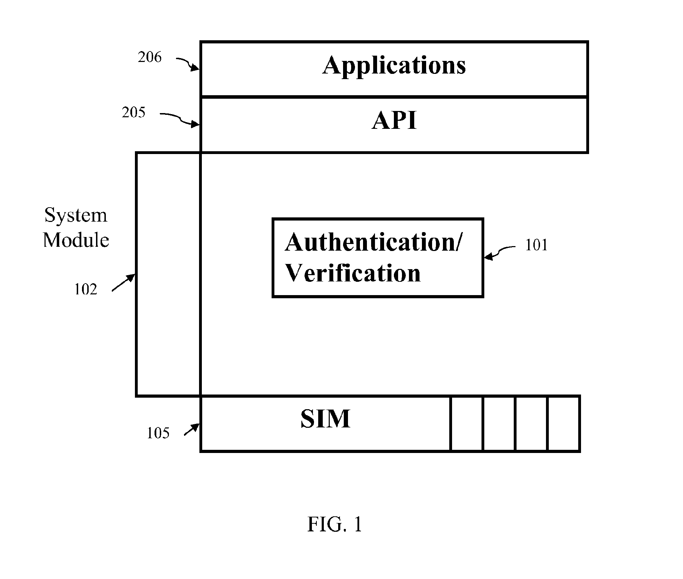

Fig. 1 provides a simplified overview of the functional interrelationship between the security authentication/verification controller 101, mobile device system module 102, the application programming interface 205, the applications 206 and the data stored on the SIM 105.

In a conventional mobile device, the applications running on the processor are provided unfettered access to the data stored within the SIM. The applications communicate with the data stored on the SIM via an application programming interface (API) and the processor within the system module. Because access to the data stored in the SIM is unfettered, a dishonest user who has found or stolen a mobile device may access the sensitive data stored in the SIM.

To secure data stored on the SIM 105, the various embodiments include an authentication/verification access controller 101 which serves a gatekeeper function between the API 205 and system module 102 on one side and data stored in the SIM 105 on the other. So configured, the system module 102, API 205 and various applications 206 can operate together without restriction provided access to data stored on the SIM 105 is not required. However, any access request to data stored on the SIM 105 from the system module 102 or any application 206 must be made via the authentication/verification access controller 101. Such data access is then granted by the authentication/verification access controller 101 only if the user has entered suitable biometric authentication credentials via the biometric sensor (as described more fully below).

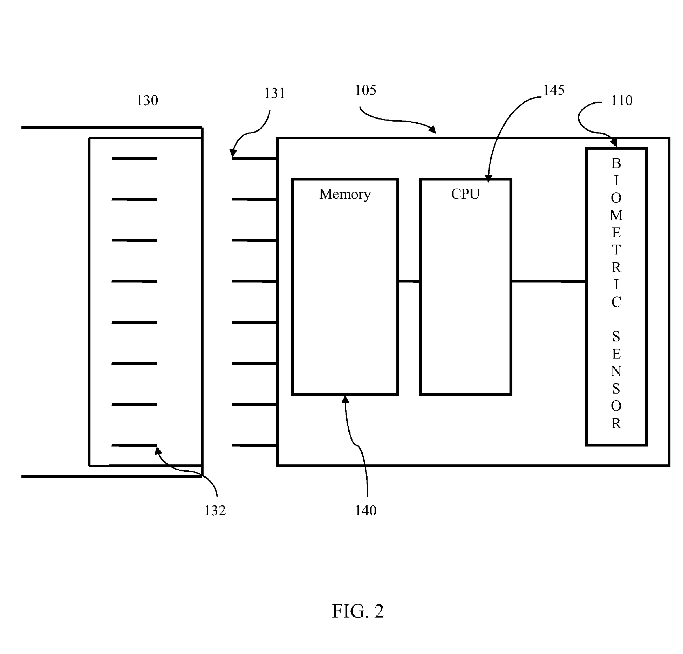

The authentication/verification access controller 101 includes an access controller application (see FIG. 3, 304) operating within a processor 145 which is coupled to a biometric sensor 110 to obtain a biometric trait from the user, such as illustrated in FIG. 2. The first time a user submits himself/herself to the biometric sensor 110, the biometric sensor 110 generates a biometric template which may be stored in memory 140. In the example case, the biometric template will be a fingerprint template. The access controller application 304 operating within a processor 145 subsequently compares the stored fingerprint template against a candidate fingerprint image which is offered to authenticate the user (by the user scanning a finger over the biometric sensor 110). Thus each time a user seeks to authenticate himself/herself, the user will swipe his/her finger across the biometric fingerprint sensor 110 to generate a candidate fingerprint image which serve as the user's authentication credentials. If the candidate fingerprint image matches the fingerprint template stored in memory 140 within predetermined tolerances, then applications 206 and the system module 102 are granted access to the data stored in the SIM 105. If, however, the candidate fingerprint image does not match the fingerprint template stored in template memory 305, then applications 206 and the system module 102 are denied access to the data stored in the SIM 105. Because the SIM 105 may contain provisioning data which provides the mobile device 130 with access to the wireless network, the embodiments also secure the wireless network from unauthorized use. Additionally, the various embodiment methods and devices may prevent users from using the mobile device 130 itself without first properly authenticating themselves.

To support such functionality, the authentication/verification access controller 101 is integrated within the SIM hardware/software architecture 300 of the processor 145, memory 140 and biometric sensor 110, and operates in conjunction with the mobile device hardware/software architecture 200, such as illustrated in FIG. 3. The mobile device hardware/software architecture 200 is a conventional architecture used in many mobile devices. When executing, various applications 206 operate on or request services from the device's various hardware elements. For example, these hardware elements may include the processor and internal memory, input elements such as a keyboard or microphone, output elements such as the display or speaker (none shown) and communication units such as cellular transceivers, Global Positioning System (GPS) receivers, WiFi wireless transceivers, and Bluetooth local wireless transceivers. Some applications 206 may access the mobile device's cellular transceiver to initiate a telephone or data call. Still other applications 206 may access the mobile device's SIM 105 to retrieve or store data. The applications 206 request these services through the hardware/software architecture 200. As illustrated in FIG. 3, applications 206 communicate with the device operating system 204 via an API layer 205. As above, the API layer 205 contains source code that an operating system 204 provides to support requests for processor services to be made of it by the applications 206. The operating system 204 performs basic tasks such as controlling and allocating memory, prioritizing system requests, controlling input and output devices, facilitating networking and managing file systems. The operating system 204 communicates with the various device resources via the processor found on the physical layer 203. The one or more driver layers 202 may be provided to control the various device elements such as connected modems or transceivers. The driver layer 202 contains a specific type of computer software developed to allow interaction with a particular hardware element. Typically this constitutes an interface for communicating with the specific hardware element, through the specific computer bus or communications subsystem that the hardware element is connected to, providing commands to and/or receiving data from the hardware element, and on the other end, the requisite interfaces to the operating system 204 via the physical layer 203. The hardware interface 201 comprises the physical connections with the hardware device such as the socket or receptacle that the hardware element plugs into.

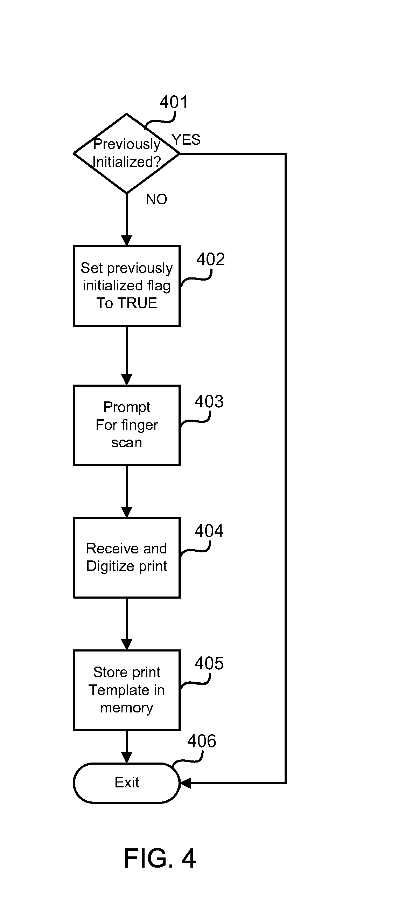

In the various embodiments, when an application 206 running on a mobile device 130 requests data stored in the SIM memory 140, the data request propagates through the device hardware/software architecture 200 until the request reaches the hardware interface layer 201 (*see e.g.,* female receptacle 132 shown in FIG. 2) and enters into the SIM hardware/software architecture 300 via the SIM hardware interface 301. This data access request may be by direct memory access and/or General Purpose Input/Output (GPIO). The SIM hardware interface layer 301 comprises the connector pins (*see e.g.,* FIG. 2 male connector pins 131) which may be the physical connection plugging the SIM 105 into the mobile device 130. Once received in the SIM hardware layer 301, the request for data stored in the SIM memory 140 that originated in the applications 206 propagates up the hardware/software architecture 300. The data request is communicated from the hardware interface 301 to the driver layer 302. As above, the driver layer 302 contains a specific type of computer software developed to allow interaction between the SIM processor 145 in the physical layer 303 to the hardware interface 301. The data request continues to travel up through the hardware/software architecture 300 from the physical layer 303 to the access controller application 304, the instruction for which may also be stored in the SIM memory 140. The access controller application 304 serves as a gatekeeper between the applications' 206 data requests and the data stored in the SIM memory 140. The operation and steps taken by the access controller application 304 are described in more detail below with reference to FIGs. 4-7. In general, the application controller application 304 controls the biometric sensor 110 to generate a biometric measurement or image of a particular biometric trait, such as a fingerprint image, and then uses the candidate fingerprint image as the user's authentication credential to grant or deny access to the data stored in the SIM 105.

To generate the candidate fingerprint image the access controller application 304 sends a request back down through the hardware/software architecture 300 to the biometric sensor 110 to obtain the candidate fingerprint image via the physical layer 303, driver layer 302 and hardware interface 301. Once the candidate fingerprint image is obtained, it is compared to a fingerprint template stored in a template memory 305 to determine if a valid match exists. The template memory 305 may be a separate memory unit, or may be integrated within the SIM memory 140. If a valid match is made then the application 206 is granted access to the requested data stored in the SIM memory 140. If the template and candidate image do not match, then access to the SIM memory is denied. As with the template memory 305, the instructions of the application controller application 304 may be contained within a subset of the SIM memory 140 or may be contained in a separate memory unit, such as an EEPROM module

The hardware/software architecture 300 illustrated in FIG. 3 is meant only as an illustration of one example organization of data and software for implementing the various embodiments. As will be appreciated by one of skill and the art of cellular handheld device design and programming, other software/hardware architectures may be used with equal effectiveness.

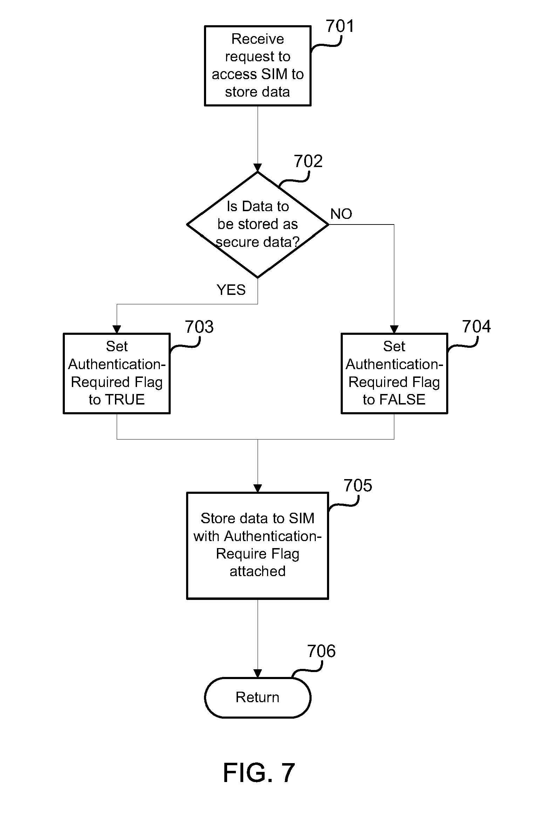

Referring back to FIG. 2, the modified SIM card 105 is configured to be inserted into slot 135 on mobile device 130. The male pins 131 on the SIM card 105 and female receptacle 132 located on the mobile device 130 are shown for illustrative purposes only, as a wide variety of hardware interface connectors may be employed. This SIM card 105 is a smart card and as such includes a memory unit 140 and a processor 145. The memory unit 140 may contain the software instructions of the application controller application 304 for implementation on the processor 145 to obtain and compare biometric traits to a saved biometric template before granting access to the data stored on the modified SIM 105. The access controller application 304 may also contain the matching algorithm that is used to compare a candidate biometric trait with the biometric template. Further implementation details of the biometric sensor and the access controller process are described below with reference to FIGs. 7-9.

In the embodiment illustrated in FIG. 2, the biometric sensor 110 is integrated within the SIM card 105. When the user launches an application 206 on the mobile device 130 that seeks to access the data stored in the SIM 105, the user must first authenticate himself/herself via the biometric sensor 110 and access controller application 304. Because the biometric template is stored in a template memory 305 and not in the mobile device 130 memory (not shown), the access controller application 304 continues to protect the data stored within the SIM 105 even when the SIM 105 is removed from the mobile device 130. The access controller application 304 may operate independent of the mobile device 130. The user may be required to authenticate himself/herself before access to the SIM 105 is granted, even if the SIM 105 has been removed from the original mobile device 130.

In order for the access controller application 304 to serve as a gatekeeper to the data stored in the SIM 105, the access controller application 304 must be initialized with a biometric template which serves as the "lock" with which subsequent candidate biometric traits ("keys") must match. FIG. 4 shows an example implementation steps involved in initializing the access controller application 304 with a biometric template. When the SIM card 105 is inserted into the mobile device 130, the access controller application 304 may be automatically launched. The application controller application 304 may first determines if the SIM 105 has been previously initialized, step 401. If the SIM 105 has been previously initialized, then a fingerprint template has been stored in template memory 405. If the initialization process has already been completed then the processor exits, step 406, and waits for the next data request of the SIM 105 from an application 206. If the SIM 105 has not been previously initialized, then the initialization process is implemented. This process may begin by setting a flag to TRUE to indicate that the initialization process is being completed, step 402. It will be appreciated that this step may also be accomplished after the rest of the initialization process has been completed. Next the access controller application 304 sends a request via the hardware/software architecture 300 and hardware/software architecture 200 to prompt the user to swipe a finger across biometric sensor 110, step 403. The prompt may be a visual prompt through the mobile device 130 display and/or an audio prompt via the mobile device's speaker. An image of the fingerprint is obtained and digitized via the biometric sensor 110 and the data forming the fingerprint template is received by the access controller application 304, step 404. The fingerprint template may be stored in the template memory 305 for comparison during each authentication process (described below). Once the fingerprint template has been stored in template memory 305, the processor exits the routine and awaits the next data request of the SIM 105 from an application 206

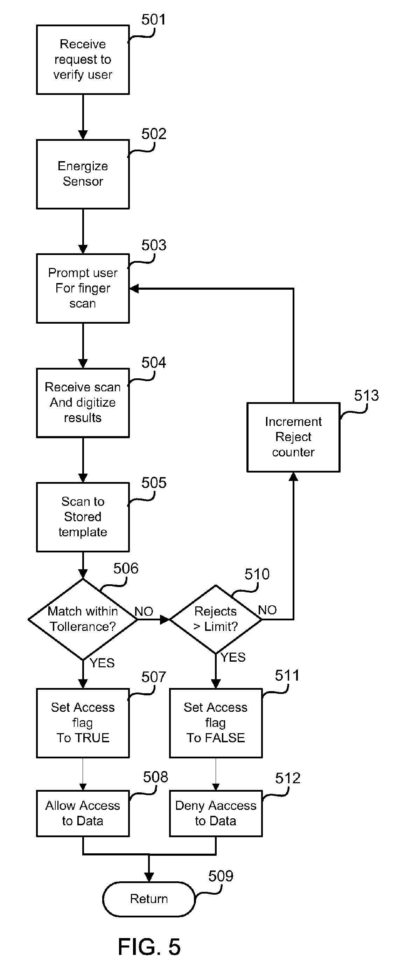

FIG. 5 shows an example of a method that requires user authentication each time an application 206 requests access to the data stored in the SIM 105. When an application 206 running on the mobile device 130 attempts to access data stored in the SIM 105, the data request is propagated through the hardware/software architectures 200, 300 until the data request is received by the access controller application 304, step 501. In response to the received request, the access controller application 304 communicates with the biometric sensor 110 via the hardware/software architecture 300 to energize the biometric sensor 110, step 502. Once the biometric sensor 110 is energized, the access controller application 304 sends a request to the processor (not shown) in the mobile device 130 to generate a display that prompts the user to scan a finger over the biometric sensor 110 (or generate a different type of candidate biometric trait if a different form of biosensor is used) to be used as an authentication credential, step 503. Data representing the image of the user's scanned fingerprint is received by the access controller application 304 from the biometric sensor 110 and digitized, step 504. The digitized fingerprint ("candidate fingerprint image") is stored in a memory location within SIM memory 140 or within a buffer within processor 145, step 505. The candidate fingerprint image is compared with the fingerprint template stored in template memory 305 during the initialization process above, step 506. If the comparison of the candidate fingerprint image and the fingerprint template match within acceptable tolerances, then an access flag is set to TRUE, step 507 and the application 206 is granted access to the data stored in the SIM 105, step 508. Once access is granted, the access controller application 304 exits the routine and awaits the next data request from an application 206 to access the data stored in the SIM 105, step 509. The access controller application 304 thereafter checks the access flag each time there is a data access request and, if the flag is set to TRUE, the access controller application 304 enables accesses to the SIM 105.

If the comparison in step 506 determines that the candidate fingerprint image does not match the fingerprint template within acceptable tolerance levels then the access controller application 304 determines if multiple unsuccessful authentication attempts have been made and if the number of unsuccessful attempts exceeds a pre-determined limit, step 510. If the number of unsuccessful attempts exceeds the pre-determined limit then the access flag is set to FALSE, step 511. The application 206 is denied access to the data stored in the modified SIM 105, step 512, and the access controller application 304 exits the routine and awaits the next data access request, step 509.

If the number of unsuccessful authentication attempts has not exceeded the pre-determined limit, step 510, then the reject counter which is counting the number of unsuccessful authentication attempts is incremented in step 513 and the user is prompted to submit another authentication credential, step 503. This routine accommodates the possibility of ambient noise or dirt on the sensor lens preventing the user from submitting an accurate authentication credential. In this way, the user is permitted at least a second chance to authenticate himself or herself. Alternatively, steps 510 and 513 may be eliminated. In such an alternative embodiment, if the comparison in step 506 determines that the entered authentication credential does not match the stored biometric template within acceptable tolerance levels then the access controller application 304 may simply set the access flag to FALSE as in step 511 and deny access to the data stored in the SIM 105, step 512, before exiting the routine and awaiting the next data access request, step 509. In this alternative, the user is simply prompted to attempt authentication again, after the access controller application 304 exits the routine and awaits a request to access the modified SIM 105, step 509.

As mentioned above, provisioning information required for proper cellular telephone operation is stored in the SIM 105. Consequently, when the telephone application attempts to place or receive a telephone call, the telephone application will make a data request of the SIM 105 to retrieve the provisioning information. If an unauthorized user attempts to use the mobile device 130 without permission (i.e., prior valid authentication), the access controller application 304 will deny access to the provisioning information stored in SIM 105. In this manner, embodiments may secure the mobile device from unauthorized telephone usage in addition to securing personal user data stored on the SIM 105.

In an alternative embodiment, the mobile device 130 may be provided with an emergency mode in the event proper user authentication cannot be achieved. In instances where the mobile device 130 is lost, it may be useful to allow the owner of the mobile device 130 to place a call to the mobile device 130 from another telephone (wired or wireless). In this way, the owner may be able to locate the mobile device 130 through the audible ring. In addition, if the owner is out of audible range, the mobile device 130 may be answered by a "Good Samaritan" who receives the call from the owner and informs the owner where the mobile device 130 is located. In other instances, a "Good Samaritan" may find the lost mobile device 130 and seek to return it to the proper owner. The owner's contact information (other than the phone number of the mobile device 130) may be stored in memory and used to contact the rightful owner. In still other instances, there may be emergency situations that occur where emergency services, such as police, fire, ambulance, are desperately needed. In each of these situations, it would be advantageous to allow the mobile device 130 to make and receive calls to and from a few specified telephone numbers. As stated above, the access controller application 304 effectively prevents an unauthorized/unauthenticated user from placing or receiving telephone calls by denying access to provisioning information stored in the SIM 105. In embodiments that provide an emergency mode, access to provisioning information may be granted to make a call for 911 services, despite the absence of a match between the candidate fingerprint image and fingerprint template. Alternatively, the access controller application 304 may be programmed with specified telephone numbers that calls may be placed to or received from. This may be accomplished by providing alternative emergency-only provisioning information that is not secured by the access controller software, or by added an additional test to the access controller to determine if the SIM data access request is for the purposes of calling one of the few specified telephone numbers, and allowing access if it is.

In yet another alternative embodiment, the access controller application 304 may permit calls to and from the mobile device's 130 service provider even in the absence of a proper authentication. The service provider may transmit an override code which effectively disables or overrides the access controller application 304. Such an alternative embodiment may be useful in instances where the owner/authenticated user needs to provide another person access to the data securely stored in the SIM 105, but is physically removed from the mobile device 130. An example of such a situation may be where the owner/authenticated user travels out of town (or anywhere for that matter) but forgets the mobile device 130. So long as the mobile device 130 is in the possession of a trusted but unauthenticated user, the owner/authenticated user may wish to disable the access controller application 304 so that the trusted but unauthenticated user can obtain access to the data stored in the SIM 105.

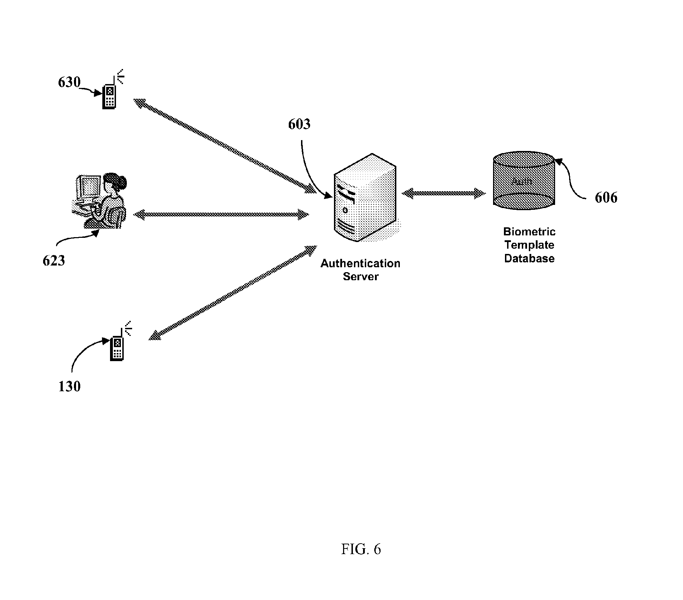

Fig. 6 illustrates an overall architecture of an alternative embodiment which provides a method to remotely disable the access controller application 304. In the alternative embodiment, an owner/authenticated user who is physically removed from the mobile device 130 contacts an authentication server 603 which is operated by the cellular telephone service provider and in communication with the mobile device 130 via a cellular network. The owner/authenticated user may contact the authentication server 603 either with another mobile device 630 that communicates with the authentication server 603 or via a computer 623 connected to the authentication server 603 via the Internet. The authentication server 603 may contain internal memory storage units such as mass storage disc drives, or may be connected to an authentication database 606, which is capable of storing the authentication credentials for each individual mobile device 130 operating on the system. The authentication credential stored in the authentication server 603 may be the biometric template also stored in the template memory 305 or may be an alternative authentication credential such as an alphanumeric password. When the owner/authenticated user contacts the authentication server 603, the owner/authenticated user transmits the authentication credential to the authentication server 603. In instances where the authentication credential stored in either the authentication server 603 or authentication database 606 is a biometric template, the owner/authenticated user must contact the authentication server 603 with either a mobile device 630 that has an appropriate biometric sensor enabled or a computer 623 with an appropriate biometric sensor enabled. An appropriate biometric sensor would be a sensor which provides the same biometric trait in the same data format as the biometric template. In other words, if the biometric template is a digitized fingerprint template, then the biometric sensor enabled on the mobile device 630 or computer 623 is a fingerprint sensor that generates a compatible digital image. In instances where the authentication template is an alphanumeric password, any mobile device 630 or computer 623 in communication with the authentication server 603 should suffice. If the owner/authenticated user provides the authentication server 603 with a proper authentication credential, the authentication server may transmit an override signal to the mobile device 130 to disable the access controller application 304. The override signal is received by the mobile device's processor (not shown) and communicated to the access controller application 304 via the hardware/software architectures 200, 300. The form of the override signal may be a simple coded command that is recognized by the access controller application 304.

In an alternative embodiment of a server-override function, the override signal provided as described above transmits the received biometric credential to the access controller application 304 in a manner that allows the access control function to proceed just as if the biometric credential (e.g., candidate fingerprint image) had been received from the biometric sensor 110 directly. Thus, in this alternative, the override signal effectively tricks the access controller application 304 into concluding that the biometric sensor 110 provided the biometric credential. This embodiment may be useful to permit a user to access data stored on the SIM 105 in the event that the biosensor 110 fails, or in the mobile device embodiment illustrated in FIG. 15 in the event the biometric sensor 110 is lost. By using an authentication server 603 to enable access to data stored on the SIM, a user can download secured data to a replacement SIM if the biometric sensor 110 fails.

In alternative embodiments, a user may be able to selectively decide what data stored on the SIM 105 requires user authentication security prior to the grant of access to the secured data stored in the modified SIM 105. For example, when a user stores data to the SIM 105, the access controller application 304 via the mobile device 130 may prompt the user to specify whether the data should be secured so that authentication is required prior to the access to the stored secure data will be granted.

FIG. 7 shows example implementation steps involved in the selective authentication initialization process As above, the access controller application 304 via the mobile device 130 processor and hardware/software architectures 200, 300 receives a request to access the SIM 105 to store data, step 701. In response, the access controller application 304 via the mobile device 130 and hardware/software architectures 200, 300 may prompt the user to identify the data being stored to the SIM as secure data requiring authentication prior to subsequent access or unsecured data not requiring authentication prior to subsequent access, step 702. If the data to be stored in the SIM 105 is secure data, then an authentication-required flag is set to TRUE, step 703. Then data is stored in the SIM 105 with the authentication-required flag attached, step 704. If the data to be stored in the SIM 105 is unsecured data, then the authentication-required flag is set to FALSE, step 705. Then data is then stored in the SIM 105 with the authentication-required flag attached, step 704. This authentication-required flag may be a single bit (i.e., "0" or "1") associated with each memory address or part of the structure of data stored in the SIM. After the data is stored in the SIM 105, the access controller application 304 exits the routine and awaits the next data request, step 706.

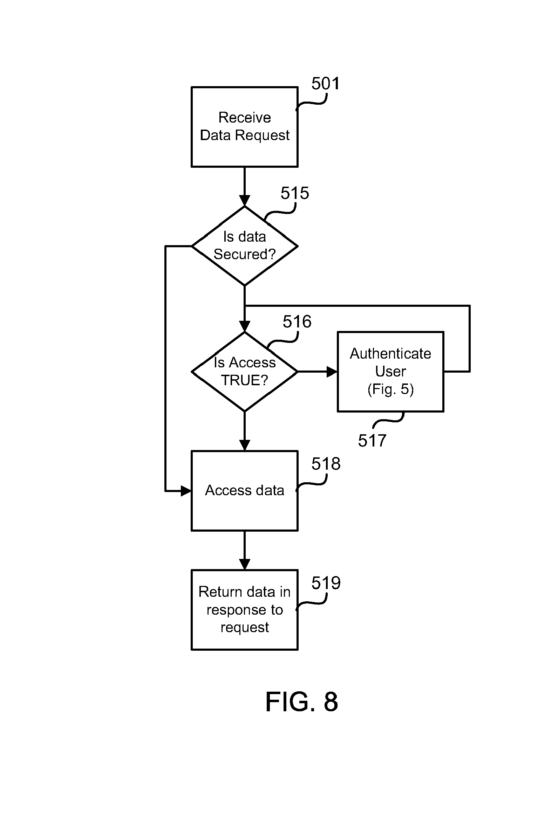

When an application 206 attempts to access the data stored in the SIM 105, the access controller application 304 will first determine if authentication is necessary. FIG. 8 shows example implementation steps involved in the selective authentication access process.

As in FIG. 5 above, the access controller application 304 receives a request for data access from an application 206 via the hardware/software architectures 200, 300, step 501. The access controller application 304 checks the authentication-required flag associated with the data requested to determine if the data requires an authentication process or not, step 515. If the requested data is un-secure data (i.e., the authentication-required flag set to FALSE), then the access controller application 304 will grant access to the unsecured data immediately, step 518. The unsecure data is returned to the requesting application 206 via the hardware/software architectures 200, 300, step 519. If the requested data is secured data (i.e., the authentication-required flag set to TRUE), step 515, then the access controller application 304 will determine if the user has been previously authenticated, step 516. If the user has been authenticated, access to the data will be granted, step 518, and the secured data will be returned to the requesting application 206 via the hardware/software architectures 200, 300, step 519. If the user has not been authenticated, step 516, then the access controller application 304 will perform the authentication process steps described above with reference to FIG. 5, step 517. In this way, a user may obtain access to the un-secured data stored on the SIM 105 without the need to execute the authentication process illustrated in FIG. 5. As a result, the user may still obtain access to un-secure data in a quick and easy manner to save time and convenience while still protecting the sensitive secure data from unauthorized access.

Alternative embodiments may grant the user unfettered access to sensitive data for a limited period of time. This may be accomplished by leaving the Access flag set to TRUE for a period of time, or said differently, resetting the Access flag to FALSE after a preset period of time. Resetting the Access flag to FALSE after a period of time requires the user to re-authenticate periodically. This period of time may be linked to a period of inactivity. For example, if a user properly authenticates himself/ herself and is properly granted access to the secured data stored in the SIM 105, a timer circuit may be started to permit the user unlimited access to the data stored in the SIM 105 for a pre-determined period of time (i.e., until the timer runs out). Such a feature avoids the need to execute the authentication procedure every time an application requests access data on the modified SIM 105. The pre-determined period of time may be a pre-set elapsed time or could last so long as the mobile device remains powered up. An embodiment may require re-authentication at power up or only when certain applications are initiated. In this way, the user may be able to provide security for sensitive data stored on the modified SIM 105, while eliminating the need for repetitive authentication procedures.

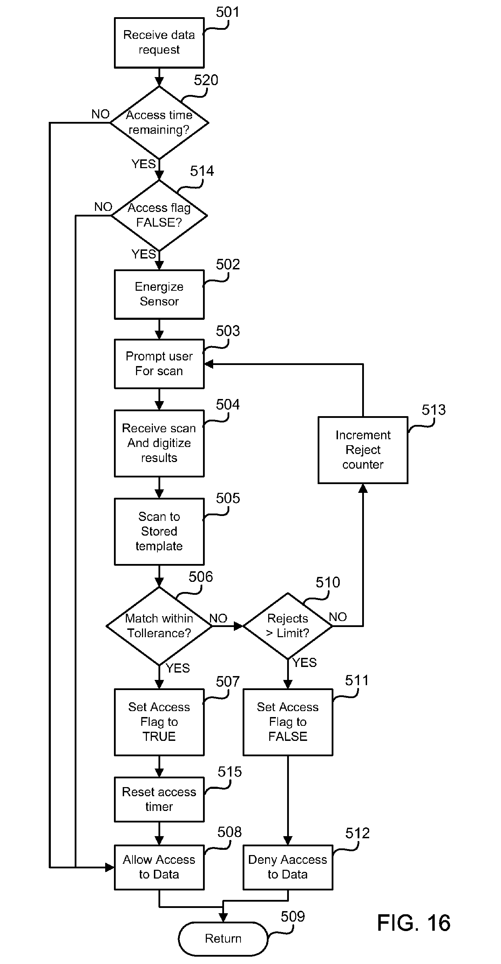

FIG. 16 illustrates the steps that may be implemented to provide user access to secured data for limited periods of time. As shown in FIG. 16, after a data access request is received by the access controller application 304, step 501, the access controller application 304 may first check the timer to see if the limited period of access to data has expired, step 520. This test may simply be whether the timer value remains greater than "0". If time remains on the access timer, the access controller application 304 checks to see if the access flag is set to TRUE or FALSE, step 514. If the access flag is already set to TRUE then access to the data stored in the SIM 105 is granted, step 508. After the access to the data stored in the SIM 105 is granted, step 508, and the access controller application 304 exits the routine and awaits the next data access request, step 509. If the access timer equals zero time left (i.e., test 520 = "NO") or the access flag is set to FALSE, the access controller application attempts to authenticate the user by executing steps 502 through 507 (including additional attempts) as described above with reference to FIG. 5. If the user is authenticated (i.e., test 506 = "YES"), the access flag is set to TRUE, step 507, the access timer is reset, step 515, and access to the data is granted, step 508, before the process returns, step 509.

In an alternative to the foregoing embodiment, an access timer routine may be included in the access controller that sets the access flag to FALSE as soon as the access timer reaches zero time left. In this embodiment, there is no need for the access controller 304 to test the access timer, step 520, since the automatic resetting of the access flag will perform the same function. Additionally, the access flag may be set to FALSE upon the occurrence of an event, such as power down of the mobile device 130, or any other customizable event, such a menu or button activate option to secure the device or its data.

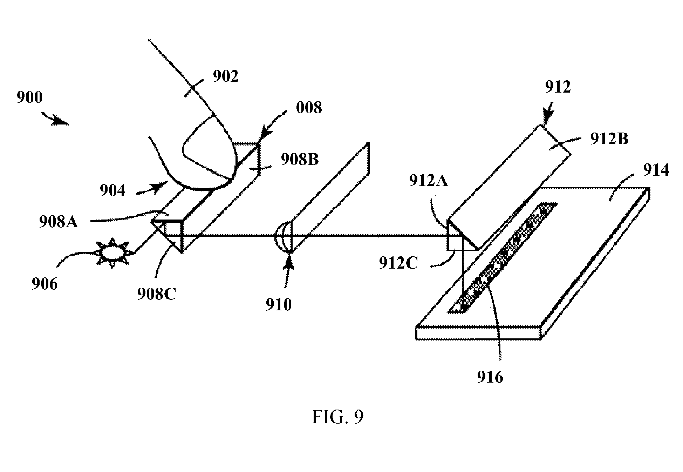

As above, the various embodiments may employ biometric sensors 110 to obtain a biometric trait of the user to act as an authentication credential. While any of a number of biometric traits may be employed, for illustrative purposes the biometric sensor 110 is shown to be a linear fingerprint sensor 900. The linear fingerprint sensor 900 may be configured to fit on a SIM 105. FIG. 9 is a simplified schematic diagram illustrating an optical fingerprint swipe sensor 900 which may be implemented as the biometric sensor 110. Instead of a linear sensor, an array-type sensor may also be employed.

Turning to FIG. 9, the fingerprint swipe sensor 900 includes a light source 906, a finger prism 908, optics 910, a sensor prism 912, and an image sensing and processing device 914. The image sensing and processing device 914 includes the image sensor 916. The Image sensing and processing device 914 may be implemented as an integrated circuit (IC) chip. For example, the image sensor 916 may be a complimentary metal oxide semiconductor (CMOS) image sensor. In addition to the optics shown in FIG. 9, the sensor 900 also includes additional optical parts, such as more lenses and an aperture.

The finger prism 908 includes a first (swipe) surface 908A, a second surface 908B, and a third surface 908C. A user swipes a fingertip 904 of a finger 902 across the swipe surface 908A of the prism 908. Light from the light source 906 illuminates the fingertip 904. Thus, when the access controller application 304 via the hardware/software architecture 300 energizes the biometric sensor in step 502 above, the light source 906 is energized. Although a single light source 906 is shown in FIG. 9, multiple light sources 906 may be used. In one form of the invention, the light source 906 includes one or more light emitting diodes (LED's). The light reflected from the fingertip 904 is reflected by the surface 908C, passes through the surface 908B, and is directed by the optics 910 onto the sensor prism 912.

The sensor prism 912 includes the first surface 912A, the second surface 912B, and the third surface 912C. The light directed onto the sensor prism 912 from optics 910 passes through the first surface 912A, is reflected by the second surface 912B, passes through the third surface 912C, and strikes the image sensor 916. The image sensing and processing device 914 processes images captured by the image sensor 916 as described in further detail below.

When a user slides or swipes his finger 902 on the finger prism 908, the image sensor 916 captures multiple images of the finger 902 during the swipe. This sequence of captured images is combined by the device 914 to form one continuous fingerprint image. The process for combining images is referred to as "stitching." Stitching may be performed by the device 914 based on navigation information that indicates how much the finger 902 moved between captured images. Navigation information may be extracted by the device 914 from the captured images themselves, as described in further detail below. In addition to using the navigation information for stitching in finger recognition applications, the navigation information may also be used to control a cursor on a display screen of a host device, as a rocker-switch for selecting menu items on a displayed menu, for free-hand writing, as well as other applications.

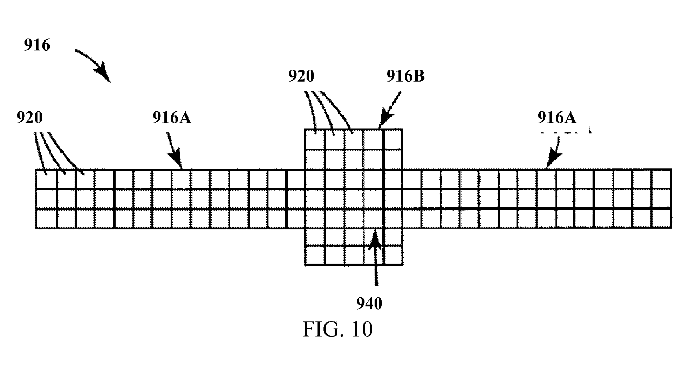

FIG. 10 is a diagram illustrating the image sensor 916 employed by one type of linear fingerprint sensor 900. The image sensor 916 includes a stitching sensor portion 916A and a navigation sensor portion 916B. The stitching sensor and the navigation sensor portions 916A and 916B each include a plurality of pixel circuits (pixels) 920 organized into a plurality of rows and a plurality of columns. The pixels 920 in the stitching sensor portion 916A capture image information for generating digital images of a finger that are stitched together to form a larger stitched image. The pixels 920 in the navigation sensor portion 916B capture image information that is processed to determine the amount and direction of movement of the finger 920. The pixels 920 that are contained in the overlapping region 940 of the stitching Sensor and the navigation sensor portions 916A and 916B capture image information for both stitching and finger navigation functions.

The number of pixels 920 in the image sensor 916 is defined by the desired resolution. For purpose of the embodiment the desired resolution is 400 dots per inch (dpi). In order to capture a fingerprint image with enough features for recognition, a certain resolution and area should be captured. With a 12 X 16 millimetre (mm) area at 400 dpi resolution, approximately 64 "minutiae" can be extracted. As will be understood by persons of ordinary skill in the art, "minutiae" are finger features that are used for recognition and matching. Smaller and less expensive sensors that scan smaller areas (e.g., 9 X 12 mm) at the same (400 dpi) or lower resolution (e.g., 300 dpi) may also be used. The stitching sensor portion 916A may include 16 rows and 144 columns of pixels 920, and the navigation sensor portion 916B includes 32 rows and 32 columns of pixels 920. In one embodiment, the image sensor 916 is implemented with three separate sensors positioned adjacent to one another.

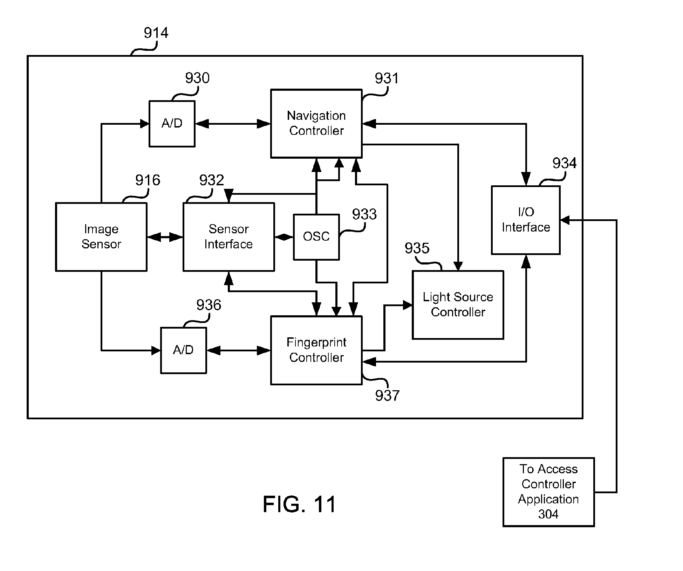

FIG. 11 is a block diagram illustrating major components of the image sensing and the processing device 914 for the fingerprint sensor 900 shown in FIG. 9. The imaging device 914 includes a image sensor 916, an analog-to-digital (A/D) converter 930, a navigation controller 931, a sensor interface 932, an oscillator (Osc) 933, an input/output (I/O) interface 934, a light source controller 935, an analog-to-digital converter 936, and a fingerprint controller 937.

The oscillator 933 provides a clock signal to the navigation controller 931, the fingerprint controller 937, and to the image sensor 916 (through sensor interface 932). the Oscillator 933 is programmable by the access controller application 304 via the hardware/software architecture 300 and the input/output interface 934. The navigation controller 931 and the fingerprint controller 937 control the image sensor 916 using control signals sent to the sensor interface 932.

In operation, the light source 906 (shown in FIG. 9) emits light that is directed onto the finger 902. The light source 906 is controlled by signals 940 from the light source controller 935, which is controlled by the navigation controller 931 and the fingerprint controller 937. Reflected light from the finger 902 is directed by the optics 910 and the prism 912 (both shown in FIG. 9) onto the image sensor 916. The charge from each pixel circuit 920 is accumulated for a predetermined exposure period, thereby creating a voltage that is related to the intensity of light incident on the pixel circuit 920. The voltage for each pixel circuit 920 in the navigation sensor portion 916B is output to the analog-to-digital converter 936. The voltage for each pixel circuit 920 in the stitching sensor portion 916A is output to the analog-to-digital converter 930. The analog-to-digital converters 930 and 936 convert the received voltages to digital values of a suitable resolution (e.g., one to eight bits) indicative of the level of voltage. The digital values represent a digital image or digital representation of a portion of the finger 902. The navigation controller 931 and the fingerprint controller 937 process the digital images as described below.

The digital image information output from the analog-to-digital converter 930 to the navigation controller 931 include several features (e.g., whorls of skin in the finger). Images of such spatial features produce translated patterns of pixel information as the finger 902 is moved relative to surface 908A of prism 908. The number of pixel circuits 920 in the navigation sensor portion 916B and the frame rate at which their contents are captured and digitized cooperate to influence how fast the finger 902 can be moved and still be tracked. The navigation controller 931 tracks movement by comparing a newly captured sample frame with a previously captured reference frame to ascertain the direction and amount of movement.

The $\Delta X$ and $\Delta Y$ movement information is output from the navigation controller 931 through the input/output interface 934 to the access controller application 304 and processor 145 for finger navigation applications. For finger recognition applications, the $\Delta X$ and $\Delta Y$ information is provided to the fingerprint controller 937 to facilitate the stitching of images together.

The fingerprint controller 937 receives digital image information from the A/D converter 936. The fingerprint controller 937 stitches the captured images together using the $\Delta X$ and $\Delta Y$ information provided by the navigation controller 931, thereby forming larger combined or stitched images. The fingerprint controller 937 may also perform other image processing operations on the images to make them more suitable for fingerprint recognition. For example, the fingerprint controller 937 may convert captured gray scale images into black and white images, which essentially enhances the contrast of the images. As will be understood by persons of ordinary skill in the art, additional image processing operations may also be performed. The fingerprint controller 937 outputs the stitched and processed images through the input/output interface 944 to the access controller application 304 via hardware/software architecture 300, which performs fingerprint recognition functions.

The fingerprint template as well as the candidate fingerprint image each includes a unique set of data for each authorized user of SIM 105. The fingerprint template is obtained during an initialization process described above, and is stored in template memory 305. The candidate fingerprint image is obtained during the subsequent authentication process described above. In one embodiment, during the initialization process, an authorized user is prompted by the access controller application 304 via the hardware/software architectures 200, 300 and mobile device 130 processor (not shown) to swipe his finger 902 in a downward direction on swipe surface 908A of swipe sensor 900, and then to swipe his finger upward on swipe surface 908A. Fingerprint controller 937 generates corresponding swipe down and swipe up stitched images of the user's finger, which are output to the access controller application 304 and stored in template memory 305 as the fingerprint template.

Subsequently, when a request to access secured data on the SIM 105 is received by the access controller application 304, the user is again prompted by the access controller application 304 via the hardware/software architectures 200, 300 and mobile device 130 processor (not shown) to swipe his finger 902 in a downward direction on swipe surface 908A of swipe sensor 900, and then to swipe his finger upward on swipe surface 908A. Fingerprint controller 937 generates corresponding swipe down and swipe up stitched images of the user's finger, which are output to the access controller application 304 and stored in a buffer (not shown) as the candidate fingerprint image.

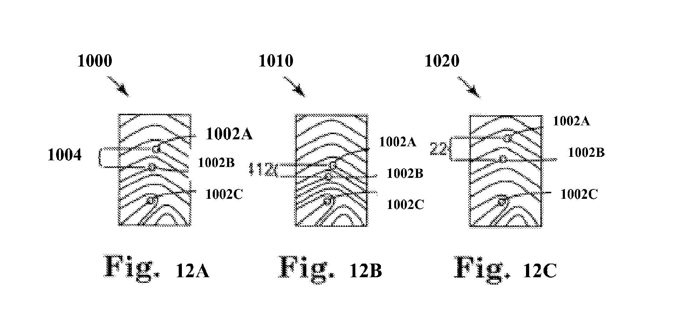

The access controller application 304 analyzes the swipe down and swipe up stitched images, and extracts minutiae from the fingerprint template and candidate fingerprint image. In one embodiment, the access controller application 304 also determines a minutiae delta value from the swipe down and swipe up stitched images. Minutiae delta values are described in further detail below with reference to FIGS. 12A-12C. The extracted minutia and the associated minutiae delta value uniquely identify the user, and are stored as a fingerprint template in template memory 305.

To perform the comparison of candidate fingerprint image to fingerprint template stored in template memory 305, the access controller application 304 compares the extracted minutiae and the minutiae delta value for the candidate fingerprint image and fingerprint template, and determines whether there is a match. The application 206 is prevented from accessing the data stored in the SIM 105 until the candidate fingerprint image has been properly authenticated by the access controller application 304.

The analysis of fingerprints for authentication/verification purposes generally requires the comparison of several features of the fingerprint pattern. These include patterns, which are aggregate characteristics of ridges, and minutia points, which are unique features found within the patterns. The major minutia features of fingerprint ridges are: ridge ending, bifurcation, and short ridge (or dot). The ridge ending is the point at which a ridge terminates. Bifurcations are points at which a single ridge splits into two ridges. Short ridges (or dots) are ridges which are significantly shorter than the average ridge length on the fingerprint. Minutiae and patterns are very important in the analysis of fingerprints since no two fingers have been shown to be identical. Once a fingerprint template is generated and stored during the initialization process, the template is used to compare against entered authentication credentials. Matching algorithms are used to compare previously stored templates of fingerprints against candidate fingerprints for authentication purposes. In order to do this either the original image must be directly compared with the candidate image or certain features must be compared. Typically, matching algorithms are pattern based or minutia based.

Pattern based algorithms compare the basic fingerprint patterns (arch, whorl, and loop) between a previously stored fingerprint template and the candidate fingerprint image temporarily stored in the buffer. This requires that the images be aligned in the same orientation. To do this, the algorithm finds a central point in the fingerprint image and centres on that. In a pattern-based algorithm, the template contains the type, size, and orientation of patterns within the aligned fingerprint image. The candidate fingerprint image is graphically compared with the fingerprint template to determine the degree to which they match.

In contrast, minutia based algorithms compare several minutia points (ridge ending, bifurcation, and short ridge) extracted from the original image stored in a template with those extracted from a candidate fingerprint image. Similar to the pattern-based algorithm, the minutia-based algorithm must align a fingerprint image before extracting feature points. This alignment must be performed so that there is a frame of reference. For each minutia point, a vector is stored into the template in the form:

$$m_i = (type, x_i, y_i, \theta_i, W)$$

where

$m_i$ is the minutia vector
*type* is the type of feature (ridge ending, bifurcation, short ridge)
$x_i$ is the x-coordinate of the location
$y_i$ is the y-coordinate of the location
$\theta_i$ is the angle of orientation of the minutia
$W$ is a weight based on the quality of the image at that location

It is important to note that it is not required for an actual image of the fingerprint to be stored as a template under this scheme. Before the matching process begins, the candidate fingerprint image can be aligned with the fingerprint template coordinates and rotation. Features from the candidate fingerprint image are then extracted and compared with the information in the fingerprint template. Depending on the size of the input image, there can be 10-100 minutia points in a template. A successful match typically only requires 7-20 points to match between the two fingerprints. The tolerance levels set forth in the processor 145 to determine whether a positive match has occurred may be set to include 7-20 match points.

FIGS. 12A-12C are diagrams illustrating simplified representations of fingerprint images for the same finger and the minutia that are compared. FIG. 12A is a simplified diagram illustrating an example fingerprint image 1000 captured by an optical area sensor. FIG. 12B is a simplified diagram illustrating a stitched fingerprint image 1010 generated from images captured during a swipe-down motion according to one embodiment of the present invention. FIG. 12C is a simplified diagram illustrating a stitched fingerprint image 1020 generated from images captured during a swipe-up motion according to one embodiment of the present invention. Images 1000, 1010, and 1020 each include the same minutiae 1002A 1002C (collectively referred to as minutiae 1002). The distances between minutiae 1002A and 10402B in images 1000, 1010, and 1020, are represented by the reference numbers 1004, 1012, and 1022, respectively. By utilizing the minutia points generated by the sensor 900, a candidate fingerprint may be generated to be used as an authentication credential. As above, the minutia points may be extracted from the candidate fingerprint image and compared to the fingerprint template of minutia points stored during the initialization process to determine if the user can be authenticated and granted access to the data stored in the SIM 105.

It will be understood by a person of ordinary skill in the art that functions performed by image sensing and processing device 914 and processor 145 may be implemented in hardware, software, firmware, or any combination thereof. The implementation may be via a microprocessor, programmable logic device, or state machine. Components of the present invention may reside in software on one or more computer-readable mediums. The term computer-readable medium as used herein is defined to include any kind of memory, volatile or non-volatile, such as floppy disks, hard disks, CD-ROMs, flash memory, read-only memory (ROM), and random access memory.

Alternative embodiments are disclosed herein which contemplate the problem of mechanical breakdown or failure of the biometric sensor 110. Because the biometric sensor 110 may include fragile components, such as a lens, prism, microphone, etc, the sensors may be subject to damage or mechanical failure. In the event the SIM 105 requires authentication prior to the grant of access to the sensitive data, a damaged biometric sensor 110 may unnecessarily secure the stored data despite the fact that the user is in fact a proper user. The damaged biometric sensor 110 may improperly prevent a user from access to the data because a proper biometric trait cannot be obtained from the damaged biometric sensor 110. Accordingly, embodiments are disclosed which provide for a replaceable biometric sensor 110 as well as the authentication server 603 override function described above.

FIG. 13 illustrates an alternative embodiment where a replaceable biometric sensor 110 is provided. In the illustrated embodiment a biometric sensor 110 and an access control unit 120 form a module 106 that may be plugged in the SIM card 105. As shown in FIG. 13 the SIM card 105 is inserted into slot 135 on mobile device 130. The SIM card 105 is outfitted with a receptacle which allows a biosensor module 106 containing a biometric sensor unit 110 and access control unit 120 to be plugged into the SIM 105. The access control unit 120 contains a dedicated microprocessor 121 and memory unit 122. The microprocessor 121 further includes a buffer 123 to temporarily store the candidate fingerprint image to compare against the fingerprint template stored in the memory unit 122. An access controller application 304 may be stored on the memory unit 122 or in firmware contained within the microprocessor 121. By offloading the execution of the access controller application 304 to a dedicated microprocessor 121, the processor 145 of the smart card 105 is freed up to perform other functions. In addition, the alternative embodiment shown in FIG. 13 allows the user to replace the biometric sensor 110 in the event of damage or malfunction.

In operation, once the biosensor module 106 is plugged into the SIM card 105, the alternative embodiment shown in FIG. 13 operates just as the integrated biosensor 110 and SIM card 105 embodiment shown in FIG. 2 above. In order to enable applications 206 on the mobile device 130 to access the data stored in the SIM 105, users must first authenticate themselves via the biometric sensor 110 and access controller application 304 contained within the access control unit 120. In instances where the biosensor module 106 is removed from the SIM 105, the data stored therein is unaccessible, thus securing the data. For example, when the biosensor module 106 is removed from the SIM 105, the read/write bit operating the SIM 105 may be disabled. Plugging a biosensor module 106 into the SIM 105 may automatically enable the read/write bit of the SIM 105. However, each replaceable biosensor module 106 must first be authorized to be plugged into the SIM 105. To be an authorized biosensor module 106, the new biosensor module 106 must contain the same biometric template as the older biosensor module 106 that it is replacing. Otherwise, the security measures afforded by the biosensor module 106 and access controller application 304 contained therein could be easily defeated. In other words, if a user wants to replace the lock (i.e., the biosensor module 106) then the new lock must only be allowed to open with the same key (i.e., the same fingerprint template),

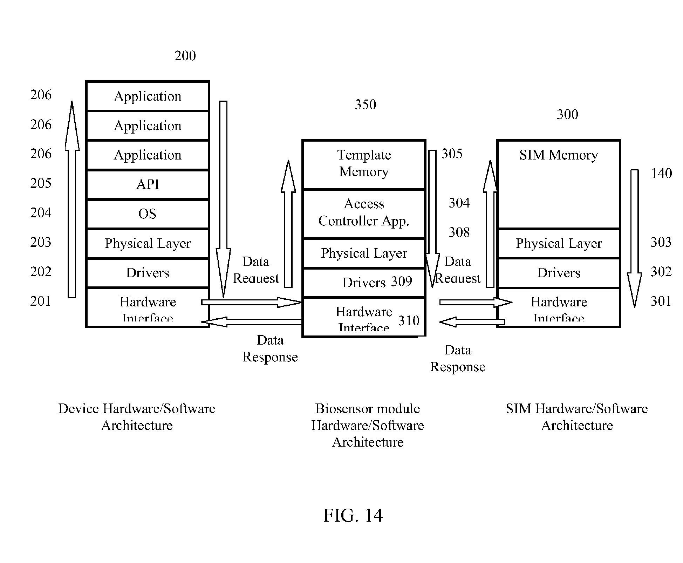

FIG. 14 illustrates an alternative hardware/software architecture scheme that supports the functionality of the embodiment depicted in FIG. 13. As shown in FIG, 14, biosensor module hardware/software architecture 350 is placed in between the device hardware/software architecture 200 and SIM hardware/software architecture 300. In this manner the biosensor module 106 may implement the necessary process steps to act as a gatekeeper to the data stored in the SIM 105. In other words, a data access request originating from the applications 206 in the mobile device 130 passes through the biosensor module 106 via the biosensor module hardware/software architecture 350. When an application 206 in the mobile device requests data stored in the SIM 105, the requests propagates down the device hardware/software architecture 200 to the hardware interface layer 201 just as described above with respect to FIG. 3. The data request enters the biosensor module hardware/software architecture 350 via the hardware layer 310. The hardware layer 310 is similar to the hardware layer 201 of the device hardware/software architecture 200 and SIM hardware/software architecture 300 in that the hardware interface 310 comprises the physical connections such as the socket or receptacle that the biosensor module 106 plugs into. The data request is passed up through the driver layer 309 which behaves similarly to the driver layers 202 and 302 described above to receive the data request received at hardware layer 310. The data requests is passed up to the physical layer 308 which contains the microprocessor 121 and memory unit 122. The physical layer 308 passes the data request to the access controller application 304, which is now contained in the biosensor module 106, to perform the authentication operation. Just as before, the access controller application 304 will prompt the user via the mobile device 130 and hardware/software architectures 200, 350 to swipe a finger across biometric sensor 110 to obtain a candidate fingerprint image. The candidate fingerprint image is compared with the biometric template stored in template memory 305 which is contained within the biosensor module 106 to determine is a match is made. If the access controller application 304 determines that a valid match is made, the access controller application 304 may pass the data access request originating in the applications 206 to the SIM 105 via the hardware/software architectures 350 and 300. The granted data access request passed from the biosensor module 106 to the SIM 105 propagates through the hardware/software architecture 300 in much the same way as described above with respect to FIG. 3 above.

When an application 206 requests data from the SIM card 105, the access controller application 304 determines whether to grant access to the data stored in the SIM 105 based on a comparison of candidate fingerprint image to a fingerprint template stored in memory. The grant or denial of access may be implemented via software instructions or via hardware elements. For example, if access to the SIM 105 is granted, the access controller application 304 could control a read/write access flag. When a SIM 105 is plugged into a mobile device 130 and the user has been authenticated, a read/write enable lead is set to high when the SIM 105 is properly seated in the socket or receptacle 132. In embodiments of the invention, the read/write enable lead which indicates that the SIM 105 is properly seated in its receptacle or socket 132 could be an input into an AND gate. The other input of the AND gate could be outputted from the access controller application 304 such that if the comparison between candidate fingerprint and fingerprint template results in a match, a high signal is inputted into the AND gate. The output of the AND gate is then connected to the read/write enable lead of the SIM 105 memory module 140. In this way, data access requires that the SIM 105 be properly seated in its receptacle/socket 132 and a valid user authentication be accomplished via the access controller application 304.

FIG. 15 illustrates another alternative embodiment where a replaceable biometric sensor 110 is provided. In contrast to the embodiment shown in FIG. 13 above, only the biometric sensor 110 forms a module 107 that may be plugged into the SIM card 105. The access controller application 304 and template memory 305 are contained within the memory 140 of the SIM 105. In this manner, the execution of the access controller application 304 is performed on the processor 145 contained within the SIM 105. Consequently, the biosensor module 107 is not only replaceable, but also cheaper to manufacture as the separate processor 121 and memory unit 122 are no longer included in the biosensor module 107. The embodiment is also advantageous in that the fingerprint template remains stored with the data it is intended to secure. In this manner, simply replacing the biosensor module 107 will not allow an unauthenticated user to bypass the access controller application 304. The replaceable biosensor 107 can be "off-the-shelf" units that do not require pre-authorization to plug into the SIM 105 as is done in the embodiment of FIG. 13.

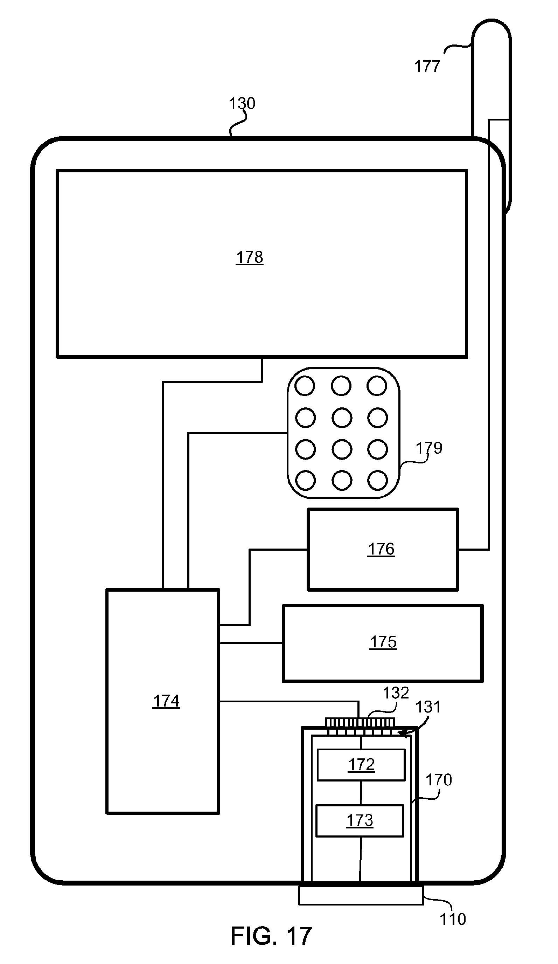

Another embodiment is a biometrics access control card that is configured to plug into a mobile device and enable use of the mobile device if the user has authenticated himself/herself. The biometrics access control card 170 may be configured as shown in FIG. 17 to include a biometrics sensor 110, associate electronics 172, 173 and electrical contacts 131 for connecting to the mobile device 130. The biometrics sensor 110 may be any of the biometric sensors described herein. The biometric access control card 170 may be received in a slot of the mobile device 130 and configured so its male connector pins 131 engage with female connector pins or slots 132 so that the access control card 170 can be readily installed or removed.. It should be noted that the male and female connectors are interchangeable (i.e., the male connector may be on either the card or the mobile device).

Through male and female pins 131 and 132, the biometric access card 170 may connect to the processor 174 and internal memory unit 175 of the mobile device 130. So configured, the methods for authenticating the user based on biometric sensor data described herein may be implemented on the access control card's processor 173 or the mobile device's processor 174, or partially in both processors, based upon a biometric template stored in the access control card's memory 172 or the mobile device's internal memory unit 175. The mobile device's processor 174 may also coupled to a wireless modem 176 (such as a cellular telephone receiver chip) coupled to an antenna 177, as well as a display 178 and user inputs, such as a keypad 179.

Alternatively, the access control card 170 may include an access control unit 120 as described above with reference to FIG. 13, which includes a memory 172 and a processor 173 integrated within the access control card 170 itself In this embodiment the methods for authenticating the user based on biometric sensor data described herein may be implemented on the card's processor 173 based upon a biometric template stored in the card's memory 172 and/or in the mobile device's internal memory unit 175.

As with other embodiments described herein, the card's memory 172 or the mobile device's memory unit 175 may store processor executable software instructions for interpreting signals from the biometrics sensor 110 and activating an access enable signal (similar to the access control unit 120 described above with reference to FIG. 13), as well as a biometric template (e.g., a fingerprint template) of the user for comparison with signals received from the biometrics sensor 110. Either the card's processor 173 or the mobile device's processor 174 may be configured with software instructions to prompt the user (e.g., by generating menu or request message in the display 178) to use the biometric sensor to generate a candidate biometric trait, comparing the candidate biometric trait with a biometric template stored in the memory (either the card's memory 172 or the mobile device's memory unit 175), authenticating the user if the generated candidate biometric trait matches the biometric template stored in the memory. If the user is authenticated, the processor 173 provides signals (e.g., a voltage on a particular lead) to the mobile device 130 which allows the mobile device 130 to be used or operated. Alternatively, if authentication process is accomplished within the mobile device 130 by the mobile device's processor 174, the processor 174 allows use of the mobile device 130 if the user is authenticated.

Operation of the biometrics access control card 170 can proceed in a manner very similar to those of the biometric smart card embodiments described herein except that access to the mobile device is controlled rather than just its memory. By providing a biometric access control capability in a removable card, the mobile device 130 can be protected from unauthorized use while providing the capability to quickly repair or replace the biometric sensor. Such removable biometrics access control cards 170 can be standardized in form and function for easier development, manufacture and integration with mobile devices 130.

The hardware used to implement the events of the forgoing embodiments may be processing elements and memory elements configured to execute a set of instructions, wherein the set of instructions are for performing method steps corresponding to the above events. Alternatively, some steps or methods may be performed by circuitry that is specific to a given function.

Those of skill in the art would appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The steps of a method or algorithm described in connection with the embodiments disclosed herein may be embodied directly in hardware, in a software module executed by a processor, or in a combination of the two. The software module may reside in a processor readable storage medium and/or processor readable memory both of which may be any of RAM memory, flash memory, ROM memory, EPROM memory, EEPROM memory, registers, hard disk, a removable disk, a CD-ROM, or any other tangible form of data storage medium known in the art. Moreover, the processor readable memory may comprise more than one memory chip, memory internal to the processor chip in separate memory chips, and combination of different types of memory such as flash memory and RAM memory. References herein to the memory of a mobile device are intended to encompass any one or all memory modules within the mobile device without limitation to a particular configuration, type or packaging. An exemplary storage medium is coupled to a processor in either the mobile handset or the server such that the processor can read information from, and write information to, the storage medium. In the alternative, the storage medium may be integral to the processor. The processor and the storage medium may reside in an ASIC. The ASIC may reside in a user terminal. In the alternative, the server processor and the storage medium may reside as discrete components in a user terminal.

The foregoing description of the various embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein, and instead the claims should be accorded the widest scope consistent with the principles and novel features disclosed herein.

**Claims**

1. A smart card for storing data for use in a mobile device comprising:

   a processor;
   a biometric sensor coupled to the processor; and
   a memory coupled to the processor, the memory having stored therein software instructions configured to cause the processor to perform steps comprising:

   receiving a data access request to access data stored in the smart card;
   prompting a user to complete an authentication process, wherein said authentication process comprises:

   prompting the user to use the biometric sensor to generate a candidate biometric trait;
   comparing the candidate biometric trait with a biometric template stored in the memory; and
   authenticating the user if the generated candidate biometric trait matches the biometric template stored in the memory; and granting access to the data stored in the smart card only if the

   user is authenticated.

2. The smart card of claim 1, wherein the software instructions in the memory are further configured to prompt the user to use a biometric sensor coupled directly to the smart card.

3. The smart card of claim 1, wherein the software instructions in the memory are further configured to prompt the user to use a biometric sensor integrated in the smart card.

4. The smart card of claim 1, wherein the software instructions in the memory of the smart card are further configured to cause the processor to grant access to provisioning data stored in the smart card to both authenticated users and non-authenticated users; wherein the access to provisioning information allows the mobile device to place and receive telephone calls to and from a limited number of telephone numbers.

5. The smart card of claim 1, wherein the software instructions in the memory of the smart card are further configured to cause the processor to receive the candidate biometric trait from a remote biometric sensor.

6. The smart card of claim 1, wherein the software instructions in the memory of the smart card are further configured to cause the processor to selectively identify data stored on the smart card as unsecure data, wherein access to unsecure data is granted to an authenticated user and a non-authenticated user.

7. The smart card of claim 1, wherein the software instructions in the memory of the smart card are further configured to cause the processor to grant access to data stored on the smart card for a preset period of time after the user has been authenticated.

**8.** The smart card of claim 1, wherein the software instructions in the memory of the smart card are further configured to cause the processor to determine whether an application requesting access to data stored on the smart card requires the user to be authenticated, wherein the user is only prompted to complete the authentication process when the data request is received from an application that requires user authentication.

**9.** The smart card of claim 1, wherein the biometric sensor is a modular biometric sensor that may be replaced.

**10.** A method for controlling access to data stored in a smart card for use in a mobile device, comprising:

receiving a data access request for data stored in the smart card;
prompting a user to complete an authentication process, wherein said authentication process comprises:

prompting the user to use a biometric sensor to generate a candidate biometric trait;
comparing the candidate biometric trait with a biometric template stored in a memory; and
authenticating the user if the generated candidate biometric trait matches the biometric template stored in the memory; and
granting access to the data stored in the smart card only if the user is authenticated.

**11.** The method of claim 10, wherein the prompting the user to use a biometric sensor prompts the user to use a biometric sensor coupled directly to the smart card.

**12.** The method of claim 10, wherein the prompting the user to use a biometric sensor prompts the user to use a biometric sensor integrated in the smart card.

**13.** The method of claim 10, wherein the biometric trait and biometric template are both fingerprint images.

**14.** The method of claim 10, further comprising granting access to provisioning data stored in the smart card to both authenticated users and non-authenticated users; wherein the access to provisioning information allows the mobile device to place and receive telephone calls to and from a limited number of telephone numbers.

**15.** The method of claim 14, wherein the limited number of telephone numbers include emergency service telephone numbers.

**16.** The method of claim 10, further comprising generating the candidate biometric trait at a remote biometric sensor. [I'm concerned this is way to broad and encompasses biometrically protected data as in laptop computers. I'd delete it.]

**17.** The method of claim 10 further comprising performing the authentication process in a server and sending an override signal to the mobile device if the user is authenticated, wherein receipt of the override signal by the mobile device enables access to the data stored in the smart card.

**18.** The method of claim 10 further comprising selectively identifying data stored on the smart card as unsecure data, wherein access to unsecure data is granted to an authenticated user and a non-authenticated user.

**19.** The method of claim 10, further comprising granting access to data stored on the smart card for a preset period of time after the user has been authenticated.

**20.** The method of claim 10, further comprising determine whether an application requesting access to data stored on the smart card requires the user to be authenticated, wherein the user is only prompted to complete the authentication process when the data request is received from an application that requires user authentication.

**21.** A smart card for storing data for use in a mobile device comprising:

means for receiving a data access request to access data stored in the smart card;
means for generating a candidate biometric trait and biometric template;
means for storing said biometric template;
means for prompting a user to use said means for generating the candidate biometric trait;
means for comparing the candidate biometric trait with the stored biometric template;
means for authenticating the user if the generated candidate biometric trait matches the stored biometric template; and
means for granting access to the data stored in the smart card if the user is authenticated.

**22.** The smart card of claim 21, wherein the means for generating the candidate biometric trait and biometric template generates fingerprint images.

**23.** The smart card of claim 21 further comprising means for granting access to provisioning data stored in the smart card to both authenticated users and non-authenticated users; wherein the access to provisioning information allows the mobile device to place and receive telephone calls to and from a limited number of telephone numbers.

24. The smart card of claim 23 wherein the limited number of telephone numbers include emergency service telephone numbers.

25. The smart card of claim 21 further comprising means for generating the candidate biometric trait at a location remote from the mobile device.

26. The smart card of claim 21 further comprising means for receiving an override signal from a remote location, wherein receipt of the override signal enables access to the data stored in the smart card to both authenticated and non-authenticated users.

27. The smart card of claim 21 further comprising means for selectively identifying data stored on the smart card as unsecure data.

28. The smart card of claim 21 further comprising means for granting access to an authenticated user for a preset period of time.

29. A smart card for storing data for use in a mobile device comprising:

a smart card memory for storing the data for use in a mobile device; and
a smart card processor coupled to the memory; and
a biosensor module unit coupled to the smart card processor, wherein the biosensor module unit comprises:

a biometric sensor;
a biosensor module processor; and
a biosensor module memory coupled to the biosensor module processor, the biosensor module memory having stored therein software instructions configured to cause the biosensor module processor to perform the steps comprising:

receiving a data access request to access data stored in the smart card memory;
prompting a user via the mobile device to complete an authentication process, wherein said authentication process comprises:

prompting the user to use the biometric sensor to generate a candidate biometric trait;
comparing the candidate biometric trait with a biometric template stored in a memory unit; and
authenticating the user if the generated candidate biometric trait matches the biometric template stored in the memory unit; and
granting access to the data stored in the smart card

memory only if the user is authenticated.

30. The smart card of claim 29 wherein the memory unit storing the biometric template is the biosensor module memory.

31. The smart card of claim 29 wherein the memory unit storing the biometric template is the smart card memory.

32. The smart card of claim 29, wherein the software instructions in the biosensor module memory are further configured to cause the processor to grant access to both authenticated and non-authenticated users; wherein the access to provisioning information allows the mobile device to place and receive telephone calls to and from a limited number of telephone numbers.

33. The smart card of claim 29, wherein the software instructions in the biosensor module memory are further configured to cause the processor to receive the candidate biometric trait from a remote biometric sensor.

34. The smart card of claim 29, wherein the software instructions in the biosensor module memory are further configured to cause the processor to selectively identify data stored on the smart card memory as unsecure data, wherein access to unsecure data is granted to an authenticated user and a non-authenticated user.

35. The smart card of claim 29, wherein the software instructions in the biosensor module memory are further configured to cause the processor to grant access to data stored on the smart card for a preset period of time after the user has been authenticated.

36. The smart card of claim 29, wherein the software instructions in the biosensor module memory are further configured to cause the processor to determine whether an application requesting access to data stored on the smart card requires the user to be authenticated, wherein the user is only prompted to complete the authentication process when the data request is received from an application that requires user authentication.

37. A system for enabling and disabling an access control application within a smart card, comprising:

a mobile device configured to communicate via cellular wireless networks, the mobile device comprising a mobile device processor and mobile device memory in communication with the mobile device processor, wherein the mobile device memory has stored therein a number of applications for execution on the mobile device processor;

a smart card in communication with the mobile device processor, the smart card comprising a biometric sensor, and smart card memory, and a smart card processor in communication with the biometric sensor, the smart card memory and the mobile device processor,

wherein the smart card memory has stored therein data for use in the number of applications for execution on the mobile device processor and software instructions configured to cause the smart card processor to perform steps comprising:

receiving a data access request from any one of the number of applications to access data stored in the smart card;

prompting a user to complete an authentication process, wherein said authentication process comprises:

prompting the user submit to the biometric sensor to generate a candidate biometric trait;

comparing the candidate biometric trait with a biometric template stored in memory; and authenticating the user if the generated candidate biometric trait matches the biometric template stored in memory; and granting access to the data stored in the smart card only if the

user is authenticated; and

an authentication server having a server processor coupled to a server memory, wherein the authentication server is configured to receive remotely generated candidate biometric traits and biometric templates for storage in the server memory to authenticate a remote user.

38. The system of claim 37 wherein the authentication server is further configured to transmit a signal via to the smart card processor to grant access to the data stored in the smart card if the remote user is authenticated by the authentication server.

39. The system of claim 37 wherein the authentication server is further configured to transmit a signal to the smart card processor to disable the authentication process.

40. The system of claim 37 wherein the server memory contains software instructions configured to cause the server processor to perform steps comprising:

receiving a remotely generated candidate biometric trait from the user;

comparing the remotely generated candidate biometric trait with a biometric template stored in server memory;

authenticating the user if the remotely generated candidate biometric trait matches the biometric template stored in server memory; and transmitting a signal to the smart card processor to grant access to the data stored in the smart card.

41. The system of claim 37 wherein the server memory contains software instructions configured to cause the server processor to perform steps comprising:

receiving a remotely generated candidate biometric trait from the user;

comparing the remotely generated candidate biometric trait with a biometric template stored in server memory;

authenticating the user if the remotely generated candidate biometric trait matches the biometric template stored in server memory; and transmitting a signal to the smart card processor to disable the authentication process.

42. The system of claim 37, further comprising a cellular telephone network, wherein the authentication server is configured to communicate with the mobile device via the cellular telephone network.

43. A server for remotely authenticating a user to access data stored on a smart card comprising;

a server memory; and

a server processor coupled to the server memory and configured to communicate via the Internet or cellular wireless network, wherein the processor is configured by processor-executable software instructions to perform steps comprising:

receiving a remotely generated candidate biometric trait from a mobile device owner;

comparing the remotely generated candidate biometric trait with a biometric template stored in server memory; authenticating the user if the remotely generated candidate biometric trait matches the biometric template stored in the server memory; and transmitting a signal to the owner's mobile device via the cellular wireless network to disable a access control application contained in the mobile device's smart card.

44. A server for remotely authenticating a user to access data stored on a smart card comprising;

a server memory; and
a server processor coupled to the server memory and configured to communicate via the Internet or cellular wireless network, wherein the processor is configured by processor-executable software instructions to perform steps comprising:

receiving a remotely generated candidate biometric trait from a mobile device owner;
comparing the remotely generated candidate biometric trait with a biometric template stored in server memory; and
authenticating the user if the remotely generated candidate biometric trait matches the biometric template stored in server memory; and
transmitting a signal to the owner's mobile device via the cellular wireless network to grant access non-authenticated users to the data stored in the mobile device's smart card.

45. A smart card, comprising:

an interface for connecting to a mobile device;
a memory module including non-volatile memory;
a processor coupled to the memory module and the interface; and
a fingerprint scanner coupled to the processor, the fingerprint scanner comprising:

an optical path including a lens and a prism, the optical path configured to receive an image from a fingerprint;
an illuminator optically coupled to the optical path so as to illuminate a fingerprint imaged by the optical path;
an optical sensor optically coupled to the optical path so as to receive the image from the finger print;
an image generator coupled to the optical sensor and to the processor, the image generator configured to receive signals from the optical sensor, generate a fingerprint image based upon the received signals from the optical sensor, and send the generated fingerprint image to the processor,

wherein the processor is configured with software instructions to perform steps comprising:

receiving a candidate fingerprint image from the fingerprint scanner;
comparing the candidate fingerprint image to a fingerprint template stored in the memory module;
allowing access to data stored in the memory module if the candidate fingerprint image matches the fingerprint template stored in the memory module within an acceptable tolerance level; and
denying access to data stored in the memory module if the candidate fingerprint image does not match the fingerprint template stored in the memory module within an acceptable tolerance level.

46. The smart card of claim 45, wherein the fingerprint scanner is removably coupled to the processor

47. The smart card of claim 45, wherein the processor is further configured with software instructions to prompt the user to use a biometric sensor coupled directly to the smart card.

48. The smart card of claim 45, wherein the processor is further configured with software instructions to prompt the user to use a biometric sensor integrated in the smart card.

49. The smart card of claim 45, wherein the processor is further configured with software instructions to cause the processor to grant access to provisioning data stored in the memory module to both authenticated users and non-authenticated users; wherein the access to provisioning information allows the mobile device to place and receive telephone calls to and from a limited number of telephone numbers.

50. The smart card of claim 45, wherein the processor is further configured with software instructions to cause the processor to receive the candidate biometric trait from a remote biometric sensor.

51. The smart card of claim 45, wherein the processor is further configured with software instructions to cause the processor to selectively identify data stored in the memory module as unsecure data, wherein access to unsecure data is granted to an authenticated user and a non-authenticated user.

52. The smart card of claim 45, wherein the processor is further configured with software instructions to cause the processor to grant access to data stored in the memory module for a preset period of time after the user has been authenticated.

**53.** The smart card of claim 45, wherein the processor is further configured with software instructions to cause the processor to determine whether an application requesting access to data stored in the memory module requires the user to be authenticated, wherein the user is only prompted to complete the authentication process when the data request is received from an application that requires user authentication.

**54.** A smart card, comprising:

an interface for connecting to a mobile device;
a smart card memory module including non-volatile memory;
a smart card processor coupled to the memory module and the interface; and
a fingerprint module coupled to the processor comprising:

a fingerprint module interface for connecting to the smart card;
a fingerprint module memory unit including non-volatile memory;
a fingerprint module processor coupled to the fingerprint module memory unit;
a fingerprint scanner coupled to the fingerprint module processor, the fingerprint scanner comprising:

an optical path including a lens and a prism, the optical path configured to receive an image from a fingerprint;
an illuminator optically coupled to the optical path so as to illuminate a fingerprint imaged by the optical path;
an optical sensor optically coupled to the optical path so as to receive the image from the finger print;
an image generator coupled to the optical sensor and to the fingerprint module processor, the image generator configured to receive signals from the optical sensor, generate a fingerprint image based upon the received signals from the optical sensor, and send the generated fingerprint image to the fingerprint module processor,

wherein the fingerprint module processor is configured with software instructions to perform steps comprising:

receiving a candidate fingerprint image from the fingerprint scanner;
comparing the candidate fingerprint image to a fingerprint template stored in a memory storage unit;

allowing access to data stored in the smart card memory module if the candidate fingerprint image matches the fingerprint template stored in the memory storage unit within an acceptable tolerance level; and
denying access to data stored in the smart card memory module if the candidate fingerprint image does not match the fingerprint template stored in the memory storage unit within an acceptable tolerance level.

**55.** The smart card of claim 54, wherein the memory storage unit is the fingerprint module memory unit.

**56.** The smart card of claim 54, wherein the memory storage unit is the smart card memory module.

**57.** The smart card of claim 54, wherein the fingerprint module is removably coupled to the smart card.

**58.** The smart card of claim 54, wherein the fingerprint module processor is further configured with software instructions to cause the fingerprint module processor to grant access to provisioning data stored in the smart card memory module to both authenticated users and non-authenticated users; wherein the access to provisioning information allows the mobile device to place and receive telephone calls to and from a limited number of telephone numbers.

**59.** The smart card of claim 54, wherein the fingerprint module processor is further configured with software instructions to cause the fingerprint module processor to receive the candidate biometric trait from a remote biometric sensor.

**60.** The smart card of claim 54, wherein the fingerprint module processor is further configured with software instructions to cause the fingerprint module processor to selectively identify data stored in the memory module as unsecure data, wherein access to unsecure data is granted to an authenticated user and a non-authenticated user.

**61.** The smart card of claim 54, wherein the fingerprint module processor is further configured with software instructions to cause the fingerprint module processor to grant access to data stored in the memory module for a preset period of time after the user has been authenticated.

**62.** The smart card of claim 54, wherein the fingerprint module processor is further configured with software instructions to cause the fingerprint module processor to determine whether an application requesting access to data stored in the memory module requires the user to be authenticated, wherein the user is only prompted to complete the authentication process when the data request is received from an application that requires user authentication.

63. An access control card for regulating access to a mobile device, comprising:

a processor;
a biometric sensor coupled to the processor; and
a memory coupled to the processor, the memory having stored therein software instructions configured to cause the processor to perform steps comprising:

receiving an access request to use the mobile device;
prompting a user to use the biometric sensor to generate a candidate biometric trait;
comparing the candidate biometric trait with a biometric template stored in the memory;
authenticating the user if the generated candidate biometric trait matches the biometric template stored in the memory; and
allowing use of the mobile device only if the user is authenticated.

64. A mobile handset, comprising:

a processor;
a memory coupled to the processor;
an electrical connection slot configured to receive a biometric sensor card; and
a biometric sensor connected to the electrical connection,
wherein:

the electrical connection slot is configured to electrically connect the biometric sensor to the processor; and

the memory has stored therein software instructions configured to cause the processor to perform steps comprising:

receiving an access request to use the mobile device;
prompting a user to use the biometric sensor to generate a candidate biometric trait;
comparing the candidate biometric trait with a biometric template stored in the memory;
authenticating the user if the generated candidate biometric trait matches the biometric template stored in the memory; and
allowing use of the mobile device only if the user is authenticated.

FIG. 1

FIG. 2

200                                                        300

| 206 | Application | | | SIM Memory | | 140 |
| 206 | Application | | | | | |
| 206 | Application | | | | | |
| 205 | API | | | Template Memory | | 305 |
| 204 | OS | | | Access Controller App. | | 304 |
| 203 | Physical Layer | | Data | Physical Layer | | 303 |
| 202 | Drivers | | Request | Drivers | | 302 |
| 201 | Hardware Interface | | | Hardware Interface | | 301 |

Data Response

Device Hardware/Software
Architecture

SIM Hardware/Software
Architecture

FIG. 3

401

Previously
Initialized? — YES

NO

Set previously
initialized flag
To TRUE  402

Prompt
For finger
scan  403

Receive and
Digitize print  404

Store print
Template in
memory  405

406

Exit

# FIG. 4

FIG. 5

FIG. 6

Receive
request to
access SIM to
store data

701

Is Data to
be stored as
secure data?

702

NO

YES

Set
Authentication-
Required Flag
to TRUE

703

Set
Authentication-
Required Flag
to FALSE

704

Store data to SIM
with Authentication-
Require Flag
attached

705

Return

706

FIG. 7

Receive Data Request — 501

Is data Secured? — 515

Is Access TRUE? — 516

Authenticate User (Fig. 5) — 517

Access data — 518

Return data in response to request — 519

FIG. 8

FIG. 9

FIG. 10

FIG. 11

**1000**

1002A
1004
1002B
1002C

**Fig.** 12A

**1010**

1002A
412C
1002B
1002C

**Fig.** 12B

**1020**

1002A
22
1002B
1002C

**Fig.** 12C

FIG. 13

200

| 206 | Application |
| 206 | Application |
| 206 | Application |
| 205 | API |
| 204 | OS |
| 203 | Physical Layer |
| 202 | Drivers |
| 201 | Hardware Interface |

Data Request

Data Response

350

| | Template Memory | 305 |
| 304 | Access Controller App. | |
| 308 | Physical Layer | |
| | Drivers 309 | |
| | Hardware Interface 310 | |

Data Request

Data Response

300

| SIM Memory | 140 |
| Physical Layer | 303 |
| Drivers | 302 |
| Hardware Interface | 301 |

Device Hardware/Software
Architecture

Biosensor module
Hardware/Software
Architecture

SIM Hardware/Software
Architecture

FIG. 14

130

131    140    145    107

Memory    CPU    B
I
O
M
E
T
R
I
C

S
E
N
S
O
R

110

132    105

FIG. 15

Receive data
request — 501

Access time
remaining? — 520
NO →

YES ↓

Access flag
FALSE? — 514
NO →

YES ↓

Energize
Sensor — 502

Prompt user
For scan — 503

Receive scan
And digitize
results — 504

Scan to
Stored
template — 505

Match within
Tollerance? — 506
NO → Rejects
> Limit? — 510
NO →

Increment
Reject
counter — 513

YES ↓

Set Access
Flag to
TRUE — 507

Set Access
Flag to
FALSE — 511

Reset access
timer — 515

Allow Access
to Data — 508

Deny Aaccess
to Data — 512

Return — 509

FIG. 16

FIG. 17

**Europäisches Patentamt**
**European Patent Office**
**Office européen des brevets**

# EUROPEAN SEARCH REPORT

Application Number

EP 08 10 2990

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 99/24938 A1 (SWISSCOM AG [CH]; RITTER RUDOLF [CH]) 20 May 1999 (1999-05-20)<br>* page 2, line 15 - page 3, line 12 *<br>* page 5, line 9 - page 9, line 5 *<br>----- | 1-64 | INV.<br>G07C9/00<br>G06F21/00<br>G07F7/10 |
| X | GB 2 386 803 A (NEXUS LTD [GB]; KERRIGAN FRANK [GB]) 24 September 2003 (2003-09-24)<br>* page 3, paragraph 1 - page 5, line 50, paragraph 2 *<br>* page 6, paragraph 5; figure 1 *<br>* page 8, last paragraph - page 9, last paragraph *<br>----- | 1-64 | |
| X | DE 298 21 644 U1 (STOCKO METALLWARENFAB HENKELS [DE])<br>18 February 1999 (1999-02-18)<br>* page 2, last paragraph - page 4, paragraph 2 *<br>* page 6, paragraph 5 *<br>* page 8, last paragraph - page 9, last paragraph *<br>----- | 1-64 | |
| X | WO 01/11577 A1 (PRECISE BIOMETRICS AB [SE]; WIEBE LINUS [SE])<br>15 February 2001 (2001-02-15)<br>* page 5, line 6 - page 6, line 31 *<br>* page 7, line 15 - line 33 *<br>* page 9, line 25 - page 10, line 9 *<br>* page 14, line 18 - page 15, line 22 *<br>* page 17, line 6 - line 29 *<br>----- | 1-64 | TECHNICAL FIELDS SEARCHED (IPC)<br><br>G07C<br>G06F<br>G07F |
| X | US 2005/039027 A1 (SHAPIRO MICHAEL F [US]) 17 February 2005 (2005-02-17)<br>* paragraph [0005] - paragraph [0008] *<br>* paragraph [0018] - paragraph [0020] *<br>----- | 1-64 | |

-/--

The present search report has been drawn up for all claims

| Place of search | Date of completion of the search | Examiner |
|---|---|---|
| Munich | 27 April 2009 | Papastefanou, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 08 10 2990

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 696 357 A1 (FUJITSU LTD [JP]; FUJITSU FRONTECH LTD [JP]) 30 August 2006 (2006-08-30) * paragraph [0013] * * paragraph [0062] * | 1-63 | |
| A | WO 2005/029890 A1 (INNOVA S R L [IT]; NAVAZIO MICHELE [IT]) 31 March 2005 (2005-03-31) * page 6, line 2 - page 7, line 14 * * claim 6 * | 1-64 | |

TECHNICAL FIELDS
SEARCHED      (IPC)

The present search report has been drawn up for all claims

| Place of search | Date of completion of the search | Examiner |
|---|---|---|
| Munich | 27 April 2009 | Papastefanou, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 08 10 2990

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2009

| Patent document cited in search report | | Publication date | Patent family member(s) | | | Publication date |
|---|---|---|---|---|---|---|
| WO 9924938 | A1 | 20-05-1999 | AT | 198944 | T | 15-02-2001 |
| | | | AU | 4769697 | A | 31-05-1999 |
| | | | BR | 9714648 | A | 23-05-2000 |
| | | | CA | 2285093 | A1 | 20-05-1999 |
| | | | DE | 59702968 | D1 | 01-03-2001 |
| | | | DK | 0950229 | T3 | 09-04-2001 |
| | | | EP | 0950229 | A1 | 20-10-1999 |
| | | | ES | 2154034 | T3 | 16-03-2001 |
| | | | GR | 3035659 | T3 | 29-06-2001 |
| | | | HK | 1026047 | A1 | 10-06-2005 |
| | | | JP | 2002511968 | T | 16-04-2002 |
| | | | NO | 994281 | A | 17-03-2000 |
| | | | PT | 950229 | E | 31-07-2001 |
| | | | RU | 2216114 | C2 | 10-11-2003 |
| | | | US | 6657538 | B1 | 02-12-2003 |
| GB 2386803 | A | 24-09-2003 | NONE | | | |
| DE 29821644 | U1 | 18-02-1999 | EP | 1006479 | A2 | 07-06-2000 |
| | | | JP | 2000215296 | A | 04-08-2000 |
| | | | US | 6592031 | B1 | 15-07-2003 |
| WO 0111577 | A1 | 15-02-2001 | AT | 339747 | T | 15-10-2006 |
| | | | AU | 755933 | B2 | 02-01-2003 |
| | | | AU | 6194600 | A | 05-03-2001 |
| | | | CA | 2382042 | A1 | 15-02-2001 |
| | | | CN | 1369085 | A | 11-09-2002 |
| | | | DE | 60030739 | T2 | 06-09-2007 |
| | | | EP | 1210695 | A1 | 05-06-2002 |
| US 2005039027 | A1 | 17-02-2005 | US | 2008148059 | A1 | 19-06-2008 |
| EP 1696357 | A1 | 30-08-2006 | CN | 1825244 | A | 30-08-2006 |
| | | | JP | 2006236129 | A | 07-09-2006 |
| | | | KR | 20060094829 | A | 30-08-2006 |
| | | | US | 2006193500 | A1 | 31-08-2006 |
| WO 2005029890 | A1 | 31-03-2005 | AU | 2003274700 | A1 | 11-04-2005 |

EPO FORM P0459

For more details about this annex : see Official Journal of the European Patent Office, No. 12/82